# EUROPÄISCHE PATENTSCHRIFT

(11) **EP 4 046 221 B1**
(45) Veröffentlichungstag und Bekanntmachung des Hinweises auf die Patenterteilung: **11.03.2026**
(21) Anmeldenummer: 20800016.6
(22) Anmeldetag: 15.10.2020
(51) Int. Cl.: H01M 10/00

(54) **KÜHLVORRICHTUNG FÜR EINE TRANSAKTIONSBATTERIE EINES FAHRZEUGS**
COOLING DEVICE FOR A TRACTION BATTERY OF A VEHICLE
DISPOSITIF DE REFROIDISSEMENT POUR BATTERIE DE TRACTION DE VÉHICULE

(30) Priorität: 17.10.2019 DE 102019216052
(43) Veröffentlichungstag der Anmeldung: 24.08.2022
(73) Patentinhaber: Kautex Textron GmbH & Co. KG, 53229 Bonn (DE)
(72) Erfinder: HAAS, Felix, 53129 Bonn (DE); LIPPERHEIDE, Moritz, 53119 Bonn (DE); WOLF, Hartmut, 53639 Königswinter (DE)
(74) Vertreter: Richly & Ritschel Patentanwälte PartG mbB
(86) Internationale Anmeldenummer: PCT/EP2020/078982
(87) Internationale Veröffentlichungsnummer: WO 2021/074263

(56) Entgegenhaltungen:
- WO-A1-2018/070115
- WO-A1-2019/039187
- WO-A1-2019/058805
- DE-A1- 19 829 293

## Beschreibung

Die vorliegende Erfindung betrifft eine Kühlvorrichtung nach dem Oberbegriffs des Anspruchs 1. Solch eine Kühlvorrichtung ist aus WO2019/ 039187 bekannt.

Die vorliegende Erfindung betrifft außerdem ein elektrisch antreibbares Fahrzeug mit einer Traktionsbatterie und einer obigen Kühlvorrichtung.

Aus dem Stand der Technik sind verschiedene Arten von Hochleistungsbatterien bekannt. In solchen Hochleistungsbatterien, wie sie beispielsweise als Traktionsbatterien von Fahrzeugen mitelektrischem Antrieb Verwendung finden, werden beim Laden und Entladen hohe Leistungen umgesetzt. Solche Hochleistungsbatterien können aktuell mit Spannungen von bis zu mehreren hundert Volt oder sogar bis zu 1000 Volt betrieben werden. Außerdem können aktuell Lade- und Entladeströme von mehreren hundert Ampere bis hin zu 1000 Ampere auftreten. Für zukünftige Entwicklungen sind prinzipiell auch höhere Spannungen und Ströme möglich.

In den Hochleistungsbatterien verursachen die großen Lade- und Entladeströme große thermische Verluste, die zu einer Erwärmung der Hochleistungsbatterien führen. Um die Batterien vor thermischer Beschädigung zu schützen und einen hohen Wirkungsgrad zu erzielen, ist es wichtig, die Hochleistungsbatterie in einem gewünschten Temperaturbereich zu halten. Um ein Überschreiten des Temperaturbereichs zu vermeiden, muss Wärme aus den Batterien abgeführt werden. Dies ist umso wichtiger, je größere Ströme und damit einhergehend größere thermische Verluste auftreten, damit die Batterien auch bei solchen großen Strömen in dem gewünschten Temperaturbereich bleiben. Aktuelle Batteriezellen in Lithium-Ionen Technik arbeiten am besten in einem engen Temperaturbereich von beispielsweise 15° bis 40°C bei einer großen Temperaturhomogenität mit einer Temperaturschwankung von 2 bis 4°C innerhalb der und zwischen den Batteriezellen. Bei solchen Bedingungen können ein sicherer Betrieb der Hochleistungsbatterien und eine lange Lebensdauer mit gleichbleibender Performance erreicht werden.

Um diese Bedingungen sicherzustellen und ein Überschreiten des Temperaturbereichs zu vermeiden, werden Batteriezellen von aktuellen Hochleistungsbatterien im Betrieb, **d.h.** beim Laden und/oder Entladen, gekühlt. Dabei werden aktuell verschiedene Arten der Kühlung verwendet. So kann beispielsweise eine Flüssigkeitskühlung mit einem von einem flüssigen Wärmetransportmedium durchströmten Wärmeübertrager erfolgen. Der Wärmeübertrager ist meist unter den Batteriezellen angeordnet, wobei der Wärmeübertrager über einen Kontaktwärmeübergang wärmeleitfähig mit den Batteriezellen verbunden ist. Dabei wird die Wärmekapazität des flüssigen Wärmetransportmediums verwendet, um von den Batteriezellen bzw. der Batterie insgesamt abgegebene Wärme über eine Temperaturdifferenz aufzunehmen und entweder direkt an die Umgebung oder über einen Klimakreislauf abzugeben. Als Wärmetransportmedium werden dabei beispielsweise Wasser oder eine ebenfalls elektrisch leitfähige Wasser-Glykol-Mischung verwendet, weshalb eine zuverlässige Trennung des Wärmetransportmediums von den Batteriezellen erforderlich ist.

Eine ähnliche Kühlung kann auch mit Luft als Wärmetransportmedium realisiert werden. Da Luft im Gegensatz zu Wasser nicht elektrisch leitend ist, können die Batteriezellen in direktem Kontakt mit dem Wärmetransportmedium stehen und beispielsweise davon umströmt werden. Ein Wärmeübertrager ist daher nicht zwingend erforderlich.

Bei aktuell verfügbaren Systemen erfolgt eine aktive Zirkulation des Wärmetransportmediums, um die abgegebene Wärme durch Konvektion abzuführen. Bei der aktiven Zirkulation wird das Wärmetransportmedium aktiv zirkuliert, um die Wärme von den Batteriezellen abzuführen.

Als Weiterentwicklung der Flüssigkeitskühlung mit einem Wärmeübertrager in Kontakt zu den Batteriezellen kann das flüssige Wärmetransportmedium durch die Wärmeaufnahme von dem Wärmeübertrager verdampft werden, was zu höheren Wärmeübergängen und durch die Verdampfungsenthalpie zu einer hohen Wärmeaufnahme pro Masse des Wärmetransportmediums führt. Nach einer Kondensation kann das Wärmetransportmedium wieder dem Wärmeübertrager im flüssigen Zustand zugeführt werden.

Teilweise sind auch Systeme zur Kühlung mit einem flüssigen Wärmetransportmedium in der Entwicklung, beispielsweise bei der industriellen Anwendung für Hochvolt-Traktionsbatterien, die auf einen Wärmeübertrager in Kontakt mit den Batteriezellen verzichten. Vergleichbar mit der Verwendung von Luft als Wärmetransportmedium, erfolgt die Kühlung über eine direkte Umströmung der zu kühlenden Komponenten mit dem flüssigen Wärmetransportmedium. Eine wichtige Eigenschaft des flüssigen Wärmetransportmediums ist daher dessen Dielektrizität, da das Wärmetransportmedium in direktem Kontakt mit den Batteriezellen steht, d.h. mit elektrisch leitenden und potentialführenden Komponenten. Darüber hinaus kann auch bei dem dielektrischen, flüssigen Wärmetransportmedium dessen Verdampfungsenthalpie und der damit verbundene hohe Wärmeübergang genutzt werden, wenn das Wärmetransportmedium durch den Wärmeeintrag der zu kühlenden Batteriezellen während des Wärmeüberganges verdampft. Eine solche Kühlung wird als Zwei-Phasen Immersionskühlung bezeichnet.

Bei solchen Systemen mit einer aktiven Zirkulation sind sowohl Gewicht und Energieverbrauch durch zusätzliche Aggregate wie Kompressor oder Pumpe erhöht. Außerdem erfolgt bei einem Stromausfall im Fahrzeug keine Kühlung der Batteriezellen, was insbesondere im Zusammenhang mit einer vorher erfolgten hohen Leistungsabgabe problematisch ist und zu einem Wärmestau führen kann.

Der vorliegenden Erfindung liegt die Aufgabe zugrunde, eine Kühlvorrichtung zur Kühlung einer Traktionsbatterie eines Fahrzeugs mit einem Fluid sowie ein Fahrzeug mit einer solchen Kühlvorrichtung bereitzustellen, die eine effiziente Kühlung von Batteriezellen der Traktionsbatterie bei einem geringen Gewicht und einer hohen Zuverlässigkeit ermöglichen.

Die der vorliegenden Erfindung zugrundeliegende Aufgabe wird durch eine Kühlvorrichtung mit den Merkmalen des Anspruchs 1 gelöst. Vorteilhafte Ausgestaltungen der Kühlvorrichtung sind in den von Anspruch 1 abhängigen Ansprüchen 2 bis 10 beschrieben.

Im Genaueren wird die der vorliegenden Erfindung zugrundeliegende Aufgabe durch eine Kühlvorrichtung zur Kühlung einer Traktionsbatterie eines Fahrzeugs mit einem Fluid, mit einer Verdampfungsvorrichtung zur Anbringung in einem Gehäusekörper der Traktionsbatterie, wenigstens einer Kondensierungsvorrichtung zur Anbringung an dem Fahrzeug außerhalb des Gehäusekörpers der Traktionsbatterie, und Verbindungsleitungen, die in der Verdampfungsvorrichtung verdampftes Fluid zu der wenigstens einen Kondensierungsvorrichtung und kondensiertes Fluid von der wenigstens einen Kondensierungsvorrichtung zurück zu der Verdampfungsvorrichtung leiten, gelöst.

Die erfindungsgemäße Kühlvorrichtung ist dadurch gekennzeichnet, dass die Verdampfungsvorrichtung, die wenigstens eine Kondensierungsvorrichtung und die Verbindungsleitungen einen ersten Kühlkreislauf bilden, und der erste Kühlkreislauf nach der Art eines Naturumlaufes ausgestaltet ist, wobei eine Zirkulation des Fluides durch den erste Kühlkreislauf einen Transport von gasförmigem Fluid von der Verdampfungsvorrichtung zu der wenigstens einen Kondensierungsvorrichtung und von flüssigem Fluid von der wenigstens einen Kondensierungsvorrichtung zurück zu der Verdampfungsvorrichtung umfasst, und die Zirkulation im Betrieb basierend auf Dichteunterschieden zwischen dem in der Verdampfungsvorrichtung verdampften Fluid und dem in der wenigstens einen Kondensierungsvorrichtung kondensierten Fluid und einem Höhenunterschied zwischen der wenigstens einen Kondensierungsvorrichtung und der Verdampfungsvorrichtung erfolgt.

Die der vorliegenden Erfindung zugrundeliegende Aufgabe wird auch durch ein Fahrzeug mit den Merkmalen des Anspruchs **11** gelöst. Vorteilhafte Ausgestaltungen des Fahrzeugs sind in den von Anspruch 11 abhängigen Ansprüchen 12 bis 16 beschrieben.

Im Genaueren wird die der vorliegenden Erfindung zugrundeliegende Aufgabe auch durch ein elektrisch antreibbares Fahrzeug mit einer Traktionsbatterie und einer obigen Kühlvorrichtung, wobei die Traktionsbatterie mit ihrem Gehäusekörper und der darin angebrachten Verdampfungsvorrichtung in einem Bodenbereich des Fahrzeugs angebracht ist, die wenigstens eine Kondensierungsvorrichtung außerhalb der Traktionsbatterie in einem Bereich oberhalb der Verdampfungsvorrichtung angebracht ist, und ein Fluid in der Kühlvorrichtung aufgenommen ist, gelöst.

Die erfindungsgemäße Kühlvorrichtung bildet somit einen Kühlkreislauf in dem Fahrzeug, in dem das Fluid passiv ohne Zirkulationsvorrichtung zwischen der Verdampfungsvorrichtung und der wenigstens einen Kondensierungsvorrichtung zirkuliert. Durch den Verzicht auf die Zirkulationsvorrichtung kann die Kühlvorrichtung praktisch wartungsfrei betrieben werden, da auf aktive Komponenten, die prinzipiell ausfallen könnten, verzichtet wird, was die Betriebssicherheit der Traktionsbatterie und damit des Fahrzeugs erhöht. Die erfindungsgemäß ausgeführte Kühlvorrichtung ist auch kostengünstig und weist ein geringes Gewicht auf. Durch den passiven Kühlkreislauf entfällt ein aktiver Transport des Fluides. Dies hat den Vorteil, dass die Kühlvorrichtung auch ohne Verwendung des Fahrzeugs gekühlt werden kann. Beispielsweise kann die Traktionsbatterie mit der Kühlvorrichtung nicht nur beim Laden an einer Ladestation gekühlt werden, sondern auch nach dem Ende des Ladevorgangs, ohne dass das Fahrzeug aktiv sein muss, beispielsweise zum Fahren. Somit kann in der Traktionsbatterie nach dem Betrieb, d.h. nach dem Laden der Traktionsbatterie oder nach dem Fahren des Fahrzeugs, verbliebene Wärme weiterhin abgeführt werden.

Bei der erfindungsgemäßen Kühlvorrichtung erfolgt eine passive Zirkulation des Fluides in dem ersten Kühlkreislauf. Die Kühlvorrichtung ist damit nach der Art eines Thermosiphons ausgebildet. Das Thermosiphon ist eine passive Konstruktion, die einen Wärmeaustausch durch Nutzung von natürlicher Konvektion in einem vertikalen Fluidkreislauf zwischen der Verdampfungsvorrichtung und der wenigstens einen Kondensierungsvorrichtung ermöglicht. Die Funktion des Thermosiphons beruht auf einem Dichteunterschied zwischen flüssiger und gasförmiger Phase des Fluides. Bei der Aufnahme der Wärme von den Batteriezellen der Traktionsbatterie verdampft das zunächst flüssige Fluid in der Verdampfungsvorrichtung. Dadurch strömt das gasförmige Fluid in den Verbindungsleitungen aufgrund seiner geringen Dichte und ohne Zirkulationsvorrichtung zu der wenigstens einen Kondensierungsvorrichtung, die oberhalb der Verdampfungsvorrichtung angeordnet ist. In der der wenigstens einen Kondensierungsvorrichtung gibt das gasförmige Fluid die zuvor aufgenommene Wärme an die Umgebung ab und kondensiert. Von dort strömt das kondensierte Fluid aufgrund der Schwerkraft und basierend auf dem Höhenunterschied zwischen der wenigstens einen Kondensierungsvorrichtung und der Verdampfungsvorrichtung wieder zurück in den Gehäusekörper, wo es erneut der Verdampfungsvorrichtung zur Verfügung gestellt wird. In dem Gehäusekörper der Traktionsbatterie wird ein Plenum mit flüssigem Fluid gebildet, von dem das flüssige Fluid wieder in die Verdampfungsvorrichtung eintritt.

Bei vertikaler Anordnung einer mit Dampf gefüllten Steigleitung und einer flüssigkeitsgefüllten Fallleitung herrschen am Boden der beiden Leitungen unterschiedliche Drücke aufgrund der unterschiedlichen Dichte der Dampf-, bzw. Flüssigkeitssäule vor. Werden Steigleitung und Fallleitung am Boden verbunden, wird ein Druckausgleich dadurch hergestellt, dass flüssiges Fluid aus der Fallleitung in Richtung der Dampfsäule in der Steigleitung strömt. Beim Verdampfen und weiteren Erwärmen des Fluides steigt die Konzentration des gasförmigen Fluides in der Verdampfungsvorrichtung. Durch eine stetige Verdampfung des flüssigen Fluides am Boden der Steigleitung bzw. in der Verdampfungsvorrichtung und eine Kondensation des gasförmigen Fluides am oben Ende der Steigleitung bzw. in der wenigstens einen Kondensierungsvorrichtung und anschließender Rückführung des kondensierten Fluides in die Fallleitung wird der Kreislauf geschlossen und ein dynamischer Umlauf in der Kühlvorrichtung erzeugt.

Durch die Zwei-Phasen-Kühlung kann eine effiziente Kühlvorrichtung bereitgestellt werden. Bei der Zwei-Phasen-Kühlung nimmt das flüssige Fluid in der Verdampfungsvorrichtung Wärme von den Batteriezellen auf, so dass es verdampft, und gibt in der wenigstens einen Kondensierungsvorrichtung Wärme an eine Umgebung des Fahrzeugs ab, wodurch das gasförmige Fluid wieder kondensiert. Dadurch kann das Fluid in der Kühlvorrichtung nach der Art eines Kühlkreislaufs zirkulieren, wobei das Fluid beim Verdampfen Verdampfungswärme aufnimmt, die es beim Kondensieren aus seinem gasförmigen Zustand wieder abgibt. Die Verdampfungswärme ist dabei betragsmäßig hoch, wodurch eine hohe Kühlleistung der Kühlvorrichtung erzielt werden kann.

Die Verdampfungsvorrichtung kann in dem Gehäusekörper der Traktionsbatterie als separates Bauteil eingebracht sein. Alternativ kann die Verdampfungsvorrichtung fest in dem Gehäusekörper eingebaut sein.

Die wenigstens eine Kondensierungsvorrichtung ist außerhalb des Gehäusekörpers der Traktionsbatterie angeordnet, um einen ausreichenden Höhenunterschied zu der Verdampfungsvorrichtung bereitstellen zu können. Es kann eine Kondensierungsvorrichtung vorgesehen sein. Bei einer Ausgestaltung der Kühlvorrichtung mit mehreren Kondensierungsvorrichtungen können diese auf geeignete Weise an dem Fahrzeug verteilt angeordnet sein, um gemeinsam eine erforderliche Gesamtgröße zum Kondensieren des gasförmigen Fluides bereitzustellen. Dies erleichtert auch die Anbringung an dem Fahrzeug, das die Kondensierungsvorrichtungen einfach an ein Design des Fahrzeugs angepasst werden können und Freiräume des Fahrzeugs nutzen können. Mehrere Kondensierungsvorrichtungen sind vorzugsweise parallel mit der Verdampfungsvorrichtung über parallele Verbindungsleitungen verbunden. Prinzipiell können mehrere Kondensierungsvorrichtungen auch in Reihe angeordnet und mit der Verdampfungsvorrichtung verbunden sein. Auch eine Kombination davon ist prinzipiell möglich.

Die Kondensierungsvorrichtung gibt die von dem gasförmigen Fluid beim Kondensieren aufgenommene Wärme üblicherweise an die Umgebung ab, d.h. an die Umgebungsluft. Beim Fahren des Fahrzeugs wird üblicherweise durch dessen Bewegung genug Umgebungsluft zugeführt, um eine ausreichende Wärmeabgabe von der Kondensierungsvorrichtung an die Umgebung zu bewirken. Die Wärmeabgabe kann durch eine aktive Zufuhr von Umgebungsluft beispielsweise durch eine Ventilationsvorrichtung verbessert und insbesondere auch ohne Bewegung des Fahrzeugs sichergestellt werden. Die wenigstens eine Kondensierungsvorrichtung ist dabei außerhalb des Gehäusekörpers der Traktionsbatterie angeordnet, um eine gute Kühlung durch die Umgebungsluft zu gewährleisten. Die Kühlvorrichtung kann nur eine Kondensierungsvorrichtung umfassen. Bei einer Ausgestaltung der Kühlvorrichtung mit mehreren Kondensierungsvorrichtungen können diese auf geeignete Weise an dem Fahrzeug verteilt oder gemeinsam angeordnet sein, um gemeinsam eine erforderliche Gesamtgröße zum Kondensieren des gasförmigen Fluides bereitzustellen. Eine verteilte Anbringung der Kondensierungsvorrichtungen erleichtert die Anbringung an dem Fahrzeug, da die Kondensierungsvorrichtungen einfach an ein Design des Fahrzeugs angepasst werden können und Freiräume des Fahrzeugs nutzen können.

Die Verbindungsleitungen verbinden die Verdampfungsvorrichtung und die wenigstens eine Kondensierungsvorrichtung. Prinzipiell können dabei das flüssige Fluid und das gasförmige Fluid auch zumindest teilweise durch eine gemeinsame Verbindungsleitung strömen. Vorteilhaft ist jede Kondensierungsvorrichtung mit zwei Verbindungsleitungen angeschlossen, einer Steigleitung für den Transport gasförmigen Fluides zu der Kondensierungsvorrichtung und eine Fallleitung für den Rücktransport des flüssigen Fluides. Durch die Verbindung der Verdampfungsvorrichtung und der wenigstens einen Kondensierungsvorrichtung über die Verbindungsleitungen wird insgesamt ein entsprechender Fluidkreislauf als erster Kühlkreislauf gebildet, um Wärme von den Batteriezellen der Traktionsbatterie abzuführen und an die Umgebung abzugeben.

Die Batteriezellen können einzeln oder als Einheiten/Blöcke/Module mit mehreren Batteriezellen in dem Gehäusekörper der Traktionsbatterie aufgenommen sein. Dazu kann der Gehäusekörper geeignete Aufnahmepositionen aufweisen, in der die Batteriezellen jeweils einzeln oder zu mehreren oder als Batteriemodul€ aufgenommen sind.

Die Verdampfungsvorrichtung ist ein Wärmeübertrager oder Wärmetauscher, in dem Wärme von den Batteriezellen der Traktionsbatterie an das flüssige Fluid übertragen wird, so dass dieses verdampfen kann. Eine solche Verdampfungsvorrichtung ist auch als Verdampfer bekannt. Die Kondensierungsvorrichtung ist ebenfalls ein Wärmeübertrager oder Wärmetauscher, der Wärme von dem gasförmigen Fluid aufnimmt und an eine Umgebung abgibt, so dass das gasförmige Fluid kondensiert. Eine solche Kondensierungsvorrichtung ist auch als Dampfkondensator oder Verflüssiger bekannt.

Das Fluid ist ein Wärmetransportmedium und hat vorzugsweise eine Siedetemperatur von 10°C bis 80°C bei Umgebungsdruck. Durch das Verdampfen des Fluides wird eine maximale Kühlwirkung erzielt, weshalb eine niedrige Siedetemperatur vorteilhaft ist. Die Siedetemperatur des Fluides ist vorzugsweise niedriger als eine maximale Betriebstemperatur der Batteriezellen. Durch das Sieden bei diesen Temperaturen bereits bei Umgebungsdruck, d.h. bei üblicherweise etwa einem bar, kann eine passive Kühlung mit der angegebenen Kühlvorrichtung effizient durchgeführt werden.

Die Traktionsbatterie ist vorzugsweise eine Hochleistungsbatterie, die mit Spannungen von bis zu mehreren hundert Volt oder sogar bis zu 1000 Volt sowie Lade- und Entladeströmen von mehreren hundert Ampere bis hin zu 1000 Ampere betrieben werden kann. Für zukünftige Entwicklungen sind prinzipiell auch höhere Spannungen und Ströme möglich. Um die Hochleistungsbatterie vor thermischer Beschädigung zu schützen und einen hohen Wirkungsgrad zu erzielen, wird die Traktionsbatterie in einem gewünschten Temperaturbereich gehalten. Aktuelle Batteriezellen solcher Traktionsbatterien sind beispielsweise in Lithium-Ionen Technik hergestellt und arbeiten am besten in einem engen Temperaturbereich von beispielsweise 15° bis 40°C bei einer großen Temperaturhomogenität mit einer Temperaturschwankung von 2 - 4°C innerhalb der und zwischen den Batteriezellen.

Das Fahrzeug ist ein prinzipiell beliebiges Fahrzeug mit elektrischem Antrieb. Das Fahrzeug kann ausschließlich einen elektrischen Antrieb aufweisen, oder als sogenanntes Hybridfahrzeug eine Kombination aus verschiedenen Antriebsarten aufweisen.

In einer vorteilhaften Ausführungsform ist die Verdampfungsvorrichtung in einer vertikalen Richtung unterhalb der wenigstens einen Kondensierungsvorrichtung angeordnet. Es wird ein natürliches Gefälle zwischen der wenigstens einen Kondensierungsvorrichtung und der Verdampfungsvorrichtung sichergestellt, so dass kondensiertes Fluid von der wenigstens einen Kondensierungsvorrichtung schwerkraftgetrieben zu der Verdampfungsvorrichtung zurücklaufen kann. Außerdem kann das verdampfte Fluid von der Verdampfungsvorrichtung zu der wenigstens einen Kondensierungsvorrichtung einfach aufsteigen.

In einer vorteilhaften Ausführungsform weist der erste Kühlkreislauf eine Mehrzahl Kondensierungsvorrichtungen auf, und die Mehrzahl Kondensierungsvorrichtungen sind zur verteilten Montage an dem Fahrzeug ausgeführt, insbesondere in Längsrichtung des Fahrzeugs vor und hinter der Verdampfungsvorrichtung. Durch die Mehrzahl Kondensierungsvorrichtungen kann die Kühlvorrichtung besonders zuverlässig ausgestaltet werden. Zunächst kann mit mehreren Kondensierungsvorrichtungen die Kühlleistung der Kühlvorrichtung insgesamt vergrößert werden. Darüber hinaus kann die Mehrzahl Kondensierungsvorrichtungen durch die verteilte Montage sicherstellen, dass beispielsweise unabhängig von einer Neigung des Fahrzeugs immer zumindest eine der Kondensierungsvorrichtungen relativ zu der Verdampfungsvorrichtung vorteilhaft positioniert ist, sodass ein Kondensieren des gasförmigen Fluides und ein Rückfluss des kondensierten Fluides zu der Verdampfungsvorrichtung ermöglicht wird. Bei einer Anbringung der Kondensierungsvorrichtungen in Längsrichtung sowohl vor als auch hinter der Verdampfungsvorrichtung, also vor und hinter dem Gehäusekörper der Traktionsbatterie, ist auch bei einer größeren Neigung des Fahrzeugs, wie es beispielsweise beim Fahren bergauf oder bergab vorkommen kann, zumindest eine der Kondensierungsvorrichtungen mit einem geeigneten Höhenunterschied zu der Verdampfungsvorrichtung positioniert, um den Betrieb als Thermosiphon zu gewährleisten.

In einer vorteilhaften Ausführungsform ist wenigstens eine Kondensierungsvorrichtung als Chiller zur Kopplung mit einer Klimaanlage des Fahrzeugs ausgeführt ist, um Wärme aus dem ersten Kühlkreislauf über die Klimaanalage abzuführen. Der Chiller dient als steuerbare Wärmesenke abhängig von einem Betrieb der Klimaanlage des Fahrzeugs. Dadurch ermöglicht der Chiller einen Betrieb der Kühlvorrichtung im Wesentlichen unabhängig von Umgebungstemperaturen in der Umgebung des Fahrzeugs. Durch den Chiller kann die Kühlleistung der entsprechenden Kondensierungsvorrichtung und damit die Kühlleistung der Kühlvorrichtung im Allgemeinen im Betrieb angepasst werden. Dadurch kann beispielsweise einer bevorstehenden Belastung der Traktionsbatterie, insbesondere beim Schnellladen mit großen Strömen, vorgegriffen werden, indem die Temperatur der entsprechenden Kondensierungsvorrichtung herabgesetzt wird. Es kann somit ein Vorkühlen der Traktionsbatterie bereits vor der bevorstehenden Belastung erfolgen, so dass auch die Temperatur der Batteriezellen und des Fluides vor der Belastung mit dem Chiller herabgesetzt werden kann. Außerdem kann mit dem Chiller die Wärmeabgabe der wenigstens einen Kondensierungsvorrichtung gegenüber einer Kühlung mit Umgebungsluft erhöht werden, so dass eine Verkleinerung der wenigstens einen Kondensierungsvorrichtung gegenüber einer Kühlung mit Umgebungsluft erfolgen kann. Die als Chiller ausgeführte Kondensierungsvorrichtung kann dabei parallel oder in Reihe mit wenigstens einer weiteren Kondensierungsvorrichtung angeordnet sein.

In einer vorteilhaften Ausführungsform weist die Kühlvorrichtung eine weitere Kondensierungsvorrichtung und weitere Verbindungsschläuche zur Bildung eines zweiten Kühlkreislaufs auf, und der zweite Kühlkreislauf weist eine Zirkulationsvorrichtung zum Fördern des Fluides in dem zweiten Kühlkreislauf auf. Der zweite Kühlkreislauf ist ein Kühlkreislauf, in dem eine aktive Zirkulation des Fluides durch die Zirkulationsvorrichtung erfolgt. Dazu kann die Zirkulationsvorrichtung einen Kompressor umfassen, der in der entsprechenden weiteren Verbindungsleitung zwischen der Verdampfungsvorrichtung und der weiteren Kondensierungsvorrichtung angeordnet ist und gasförmiges Fluid in die weitere Kondensierungsvorrichtung fördert. Dabei kann das gasförmige Fluid verdichtet werden, wodurch sich seine Kondensationstemperatur erhöht. In dem zweiten Kühlkreislauf kann somit ein Betrieb nach der Art einer Wärmepumpe erfolgen. Vorzugsweise ist in dem zweiten Kühlkreislauf zusätzlich eine Einstelldrossel zur Einstellung eines Druckniveaus vorgesehen, so dass über die weitere Kondensierungsvorrichtung Wärme auch bei höheren Umgebungstemperaturen leicht abgeführt werden kann. Alternativ oder zusätzlich kann die Zirkulationsvorrichtung eine Pumpe umfassen, die in der entsprechenden weiteren Verbindungsleitung angeordnet ist und flüssiges Fluid in die Verdampfungsvorrichtung fördert. Durch die Zirkulationsvorrichtung ist eine Strömungsgeschwindigkeit in dem zweiten Kühlkreislauf einstellbar. Der zweite Kühlkreislauf ermöglicht eine effiziente Kühlung des Fluides und damit der Batteriezellen, wobei eine Abhängigkeit von Umgebungsbedingungen, insbesondere einer Umgebungstemperatur, reduziert wird. Außerdem kann die Wärmeabfuhr durch die Kühlvorrichtung mit den zwei Kühlkreisläufen insgesamt vergrößert werden.

In einer vorteilhaften Ausführungsform weist der zweite Kühlkreislauf wenigstens eine Ventilvorrichtung zur strömungstechnischen Trennung von bzw. Verbindung mit dem ersten Kühlkreislauf auf. Damit kann beispielsweise in einem Normalbetrieb die Kühlung ausschließlich über den ersten Kühlkreislauf erfolgen, während der zweite Kühlkreislauf nach Bedarf zusätzlich aktiviert werden kann. Bei geschlossener Ventilvorrichtung wird insbesondere ein Eindringen von gasförmigem Fluid in den zweiten Kühlkreislauf verhindert.

Zusätzlich oder alternativ kann der erste Kühlkreislauf wenigstens eine Ventilvorrichtung zur strömungstechnischen Trennung von bzw. Verbindung mit dem ersten Kühlkreislauf aufweisen. Somit kann auch der erste Kühlkreislauf durch die entsprechende Ventilvorrichtung aktiviert bzw. deaktiviert werden, um beispielsweise die Funktion des zweiten Kühlkreislaufs zu verbessern. Auch kann die Ventilvorrichtung als Umschaltventil ausgeführt sein, mit dem die Kühlvorrichtung zwischen einem Betrieb mit lediglich dem ersten oder dem zweiten Kühlkreislauf umschaltbar ist.

In einer vorteilhaften Ausführungsform weist die Kühlvorrichtung einen Sammler zum Sammeln von flüssigem Fluid auf, wobei der Sammler insbesondere an einer Verbindung zwischen dem ersten Kühlkreislauf und dem zweiten Kühlkreislauf angeordnet ist. Der Sammler dient der Aufnahme des flüssigen Fluides. Durch den Sammler kann eine einfache Kopplung der beiden Kühlkreisläufe durchgeführt werden. Zusätzlich kann der Sammler einen Fluidvorrat bereitstellen.

In einer vorteilhaften Ausführungsform weist die Kühlvorrichtung eine Steuerungseinrichtung auf, die ausgeführt ist, eine bevorstehende Belastung der Traktionsbatterie, insbesondere beim Schnellladen, zu erfassen, und die weiter ausgeführt ist, die Traktionsbatterie und/oder das Fluid bei einer erfassten bevorstehenden Belastung mit der Kühlvorrichtung vorzukühlen. Damit kann eine Erwärmung der Batteriezellen durch einen Lade- oder Entladevorgang über einen verlängerten Zeitraum ermöglicht werden, wenn beispielsweise die Kühlvorrichtung eine geringere Kühlleistung aufweist, als die Wärmeabgabe der Batteriezellen bei maximalem Strom. Eine solche geringere Kühlleistung kann sich aus der Dimensionierung der Kühlvorrichtung und der Traktionsbatterie ergeben, oder aus Schwankungen der Umgebungsbedingungen, so dass die Kühlvorrichtung temporär eine gegenüber ihrem Maximum reduzierte Kühlleistung aufweist. Die Steuerung kann dabei beispielsweise über eine Ansteuerung einer Klimaanlage des Fahrzeugs bei einer Ausgestaltung wenigstens einer Kondensierungsvorrichtung als Chiller der Klimaanalage erfolgen. Alternativ kann die Steuerung auf einen oben angegeben zweiten Kühlkreislauf einwirken. Weiter alternativ kann die Steuerungsvorrichtung über ein Gebläse der wenigstens einen Kondensierungsvorrichtung außenseitig eine erhöhte Menge Umgebungsluft zuführen.

Erfindungsgemäβ, ist die Verdampfungsvorrichtung als Immersionsverdampfer ausgeführt und umfasst wenigstens ein Verdampfungselement, wobei das in dem wenigstens einen Verdampfungselement Mikrokanäle ausgebildet sind, oder das wenigstens eine Verdampfungselement Mikrokanalstrukturen zur Bildung von Mikrokanälen zusammen mit Batteriezellen der Traktionsbatterie aufweist, oder zwischen einer Mehrzahl Verdampfungselemente Mikrokanalstrukturen zur Bildung von Mikrokanälen zwischen den Verdampfungselementen und zusammen mit Batteriezellen der Traktionsbatterie ausgebildet sind, und die Verdampfungselemente derart angeordnet sind, dass in den Mikrokanälen flüssiges Fluid unter Aufnahme von Wärme von den Batteriezellen verdampft. Bei der Immersionskühlung kann bei einer Erwärmung der Batteriezellen die anfallende Wärme einfach an das Fluid übertragen werden, beispielsweise durch einen direkten Kontakt der Batteriezellen mit dem flüssigen Fluid. Dies ermöglicht eine effiziente Wärmeübertragung von den Batteriezellen an das Fluid. Außerdem kann die Traktionsbatterie ohne separaten Wärmeübertrager zwischen den Batteriezellen und dem Fluid bereitgestellt werden, so dass eine kompakte und auch leichte Traktionsbatterie bereitgestellt werden kann. Die Mikrokanäle ermöglichen eine hochwirksame Verdampfung des Fluides, wobei durch das Verdampfen des Fluides in den Mikrokanälen flüssiges Fluid mitgerissen wird, so dass eine innenseitige Benetzung der Fluidkanäle erfolgt. Im Betrieb können die Fluidkanäle teilweise mit flüssigem Fluid gefüllt sein. Das flüssige Fluid füllt die Mikrokanäle nicht vollständig aus, sondern beispielsweise maximal bis zur Hälfte, vorzugsweise weniger als 25%. Dadurch kann die Menge flüssigen Fluides in der Traktionsbatterie bzw. in der Kühlvorrichtung reduziert werden, wodurch das Gewicht der Kühlvorrichtung und damit der Traktionsbatterie reduziert wird. Prinzipiell ist es nicht erforderlich, dass die Mikrokanäle teilweise mit flüssigem Fluid gefüllt sind, wenn zum Beispiel im Betrieb eine Benetzung der Fluidkanäle mit flüssigem Fluid erfolgt. Dazu kann beispielsweise ein Gemisch aus flüssigem und gasförmigen Fluid an einem vertikal unteren Ende in die Fluidkanäle eintreten oder dort gebildet werden. Bei der Ausgestaltung der Mikrokanäle in dem wenigstens einen Verdampfungselement oder bei der Ausgestaltung des wenigstens einen Verdampfungselements mit Mikrokanalstrukturen zur Bildung von Mikrokanälen zusammen mit den Batteriezellen können die Verdampfungselemente jeweils unabhängig voneinander beispielsweise zwischen benachbarten Batteriezellen oder an deren Kopfseiten angeordnet sein, beispielsweise bei der Verwendung von vorgefertigten Batteriemodulen mit mehreren Batteriezellen. Bei der Ausgestaltung der Verdampfungsvorrichtung mit einer Mehrzahl Verdampfungselemente, wobei Mikrokanalstrukturen zur Bildung von Mikrokanälen zwischen den Verdampfungselementen angeordnet sind, erfolgt eine gemeinsame Anordnung der Verdampfungselemente zur Bildung der Mikrokanalstrukturen. Die Mikrokanäle werden ausgehend von diesen Mikrokanalstrukturen zusammen mit den Batteriezellen ausgebildet. Die Mikrokanalstrukturen sind also in den beiden letzten Fällen zumindest teilweise zu den Batteriezellen geöffnet und werden von den Batteriezellen unter Bildung der Mikrokanäle verschlossen.

Die Mikrokanäle weisen Abmessungen auf, die ein Einströmen des flüssigen Fluides aus dem Plenum und ein Aufsteigen und Ausströmen von verdampftem Fluid ermöglichen. Die Mikrokanäle können einen rechteckigen, quadratischen, trapezförmigen, runden oder ovalen Querschnitt aufweisen. Die Mikrokanäle können beispielsweise einen Durchmesser oder Seitenlängen von weniger als einem Zentimeter, insbesondere von weniger als fünf Millimetern, beispielsweise von etwas zwei Millimetern aufweisen. Die Mikrokanäle sind an ihrer Oberseite geöffnet, so dass das verdampfte Fluid an der Oberseite aus den Mikrokanälen ausströmen kann.

Das Fluid, das in der Traktionsbatterie verwendet wird und in den Gehäusekörper eingebracht ist, ist hier als dielektrisches Fluid ausgeführt. Das dielektrische Fluid ist elektrisch nicht leitfähig, so dass eine elektrische Isolierung der einzelnen Batteriezellen gebildet wird. Auch die Verdampfungselemente sind aus den gleichen Gründen vorzugsweise aus einem elektrisch nicht leitfähigen Material hergestellt.

In einer vorteilhaften Ausführungsform weist die Kühlvorrichtung, insbesondere wenigstens eine Kondensierungsvorrichtung, eine Druckausgleichsvorrichtung zum Druckausgleich zwischen einem Innenraum der Kühlvorrichtung und einer äußeren Umgebung auf. Der Druck in der Kühlvorrichtung kann von einem Unterdruck bis hin zu einem Überdruck von mehreren bar variieren, beispielsweise abhängig von dem verwendetem Fluid. Somit kann die Kühlvorrichtung bei einem sich darin bildenden Unterdruck belüftet werden, d. h. es wird ein Belüftungsgas, beispielsweise ein Gasgemisch wie Umgebungsluft oder auch eine speziell zugeführtes Einzelgas wie Stickstoff, zugeführt, wodurch der Druck darin steigt. Alternativ oder zusätzlich kann die Kühlvorrichtung bei einem Überdruck entlüftet werden, d. h. es wird ein Entlüftungsgas abgelassen, wodurch der Druck darin sinkt. Das Entlüftungsgas ist vorzugsweise zuvor aufgenommenes Belüftungsgas, wobei in der Praxis auch gasförmiges Fluid in dem Entlüftungsgas enthalten ist.

Der Druckausgleich kann verschiedene Vorteile für den Kühlkreislauf und die Traktionsbatterie bewirken. So kann ein in der Kühlvorrichtung und damit in der Traktionsbatterie gebildeter Unterdruck durch die Belüftung reduziert werden. Damit können kritische Unterdrücke in der Kühlvorrichtung und damit in der Traktionsbatterie vermieden werden. Entsprechend können Anforderungen an eine unterdruckstabile Ausgestaltung des Gehäusekörpers der Traktionsbatterie oder auch der Kühlvorrichtung reduziert werden, wodurch ein Komplexitätsgrad davon bei der Herstellung reduziert wird. Die Belüftung kann prinzipiell an einer beliebigen Stelle des Innenraums des Kühlkreislaufs erfolgen. Der Innenraum ist ein prinzipiell beliebiger Teil des Kühlkreislaufs, durch den das Fluid strömt, und schließt einen Innenraum der wenigstens einen Kondensierungsvorrichtung ein.

Das Entlüften erfolgt vorzugsweise aus der Kondensierungsvorrichtung, in der sich gasförmiges Fluid zum Kondensieren sammelt. Dadurch ist es möglich, Belüftungsgas von einer vorherigen Belüftung aus dem Kühlkreislauf als Entlüftungsgas abzulassen. Das Belüftungsgas weist üblicherweise eine niedrigere Siedetemperatur als das Fluid auf. Das Entlüften zum Ablassen des Belüftungsgases gewährleistet eine hohe Effizienz des Kühlkreislaufes und eine ausreichende Kühlung der Traktionsbatterie, wobei vorzugsweise nur vorher zugeführtes Belüftungsgas beim Entlüften abgelassen wird. Phasenübergänge des Fluides in der Kühlvorrichtung können einfach erreicht werden, insbesondere beim Kondensieren in der Kondensierungsvorrichtung, wenn sich in der Kühlvorrichtung kein anderes Gas oder möglichst wenig andere Gase als gasförmiges Fluid befindet/befinden. Nach dem Belüften mit dem Belüftungsgas vermischt sich das Belüftungsgas mit dem gasförmigen Fluid in der Kühlvorrichtung zu einem Gasgemisch. Dadurch wird der Wärmeübergang insbesondere in der Kondensierungsvorrichtung prinzipiell verschlechtert. Entsprechend kann eine Entlüftung über die Druckausgleichsvorrichtung durch Ablassen von Entlüftungsgas durchgeführt werden. Bevorzugt wird bei der Entlüftung das beim vorherigen Belüften aufgenommene Belüftungsgas abgelassen, um die Konzentration des gasförmigen Fluides in dem Kühlkreislauf zu erhöhen. Prinzipiell kann aber auch gasförmiges Fluid oder eine Mischung aus gasförmigem Fluid und dem Belüftungsgas als Entlüftungsgas abgelassen werden.

Um den Druckausgleich zu kontrollieren, weist die Druckausgleichsvorrichtung vorzugsweise ein steuerbares Druckausgleichsventil auf. Beispielsweise kann das Druckausgleichsventil öffnen, wenn der Druck innerhalb der Kühlvorrichtung unter einen Grenzdruck fällt, beispielsweise unter 0,8 bar. Dabei wird die Umgebungsluft beim Einströmen über die Druckausgleichsvorrichtung vorzugsweise über eine Trocknungseinrichtung getrocknet, beispielsweise über eine wechselbare Trocknungskartusche. Ein Eindringen von Feuchtigkeit in die Kondensierungsvorrichtung und darüber in den Kühlkreislauf wird minimiert. Die Feuchtigkeit, **d.h.** üblicherweise Wasser, ist prinzipiell elektrisch leitfähig, so dass ein Gemisch der Feuchtigkeit mit dem Fluid eine niedrigere Dielektrizitätszahl und eine höhere elektrische Leitfähigkeit als das Fluid allein aufweist, was zu einer Beschädigung der Traktionsbatterie durch einen elektrischen Kurzschluss führen kann.

Aufgrund des in der Kühlvorrichtung befindlichen Belüftungsgases wird bei Erwärmung des Fluides ein höheres Druckniveau erreicht, als es bei einem reinen Fluid in der Kühlvorrichtung der Fall wäre, und der Wärmeübergang in der wenigstens einen Kondensierungsvorrichtung wird prinzipiell verschlechtert. Entsprechend kann eine Entlüftung der Kühlvorrichtung über die Druckausgleichsvorrichtung durchgeführt werden. Dabei werden vorzugsweise Maßnahmen getroffen, um ein Entweichen des gasförmigen Fluides zu verhindern und entsprechend die Konzentration des gasförmigen Fluides in dem Innenraum der Kühlvorrichtung zu erhöhen. Dazu kann die Druckausgleichsvorrichtung nach der Art eines Kamins ausgeführt sein, an dessen oberen Ende sich das Druckausgleichsventil befindet. In dem Kamin erfolgt eine stoffliche Trennung aufgrund des Dichteunterschiedes gasförmigen Fluides und der anderen Gase, insbesondere der zuvor aufgenommenen Umgebungsluft. Alternativ oder zusätzlich umfasst die Druckausgleichsvorrichtung eine Filtereinrichtung, die einen Aktivkohlefilter, ein Zeolithmaterial, eine Filtermembran, einen chemischen Filter oder eine beliebige Kombination aus mehreren dieser Filterelemente aufweist. Das Zeolithmaterial ist vorzugsweise so ausgeführt, dass es bei einem Maximaldruck in der Kühlvorrichtung und einer dazugehörigen Systemtemperatur eine höhere Adsorption des gasförmigen Fluides hat als bei einem Minimaldruck und einer dazugehörigen Systemtemperatur. Zur Unterstützung kann eine aktive Temperierung des Zeolithmaterials beim Entlüften erfolgen. Der Membranfilter hält das gasförmige Fluid aus dem Gasgemisch aufgrund unterschiedlicher Molekülgrößen beim Entlüften des Innenraums zurück. Verbleibendes Entlüftungsgas ist typischerweise Umgebungsluft mit ihren Hauptbestandteilen N₂ und O₂ in geringer Molekülgröße, das heißt mit einer geringen Teilchengröße gegenüber einem molekularen Fluid mit einer komplexen Molekülstruktur, so dass das verbleibende Entlüftungsgas durch den Membranfilter durchtreten kann, und nur das gasförmige Fluid zurückgehalten wird. Ein solcher Membranfilter weist insbesondere eine Porenstruktur auf, durch welche das Entlüftungsgas hindurchtreten kann, nicht aber das gasförmige Fluid. Der chemische Filter filtert das Fluid durch Adsorption.

Die Filtereinrichtung wird vorzugsweise durch aktive Wärmezufuhr im Betrieb wieder entladen, wodurch darin aufgenommenes Fluid zurückgewonnen wird. Alternativ oder zusätzlich kann das Entlüftungsgas bei der Entlüftung aktiv gekühlt werden, sodass das darin enthaltenes gasförmiges Fluid kondensiert wird und nur verbleibende Umgebungsluft austritt. Das kondensierte Fluid kann dann im flüssigen Zustand aus der Druckausgleichsvorrichtung in den ersten Kühlkreislauf zurückgeführt werden, so dass nur geringe Fluidverluste beim Entlüften der Kühlvorrichtung auftreten. Vorzugsweise ist die Druckausgleichsvorrichtung in einer A-Säule oder einer C-Säule des Fahrzeuges, d.h. am vorderen bzw. hinteren Ende der Fahrgastzelle, angeordnet.

In einer vorteilhaften Ausführungsform ist die Traktionsbatterie mit ihrem Gehäusekörper und der darin angebrachten Verdampfungsvorrichtung unterhalb einer Fahrgastzelle des Fahrzeugs angeordnet, vorzugsweise zwischen einer Vorder- und einer Hinterachse des Fahrzeugs. Somit kann die Traktionsbatterie an einem besonders tief angeordneten Bereich des Fahrzeugs angebracht werden. Aufgrund des typischerweise hohen Gewichts der Traktionsbatterie kann das Fahrzeug zusätzlich mit einem niedrigen Schwerpunkt bereitgestellt werden, wodurch die Fahreigenschaften des Fahrzeugs verbessert werden. Auch kann bei einer Anordnung der Traktionsbatterie zwischen der Vorder- und der Hinterachse des Fahrzeugs zusätzlich erreicht werden, dass das Fahrzeug einen in Längsrichtung mittigen Schwerpunkt aufweist.

In einer vorteilhaften Ausführungsform ist die wenigstens eine Kondensierungsvorrichtung in einem Bereich oberhalb einer Hinterachse des Fahrzeugs, insbesondere oberhalb von Radhäusern der Hinterachse, angebracht. Durch die Anbringung in diesem Bereich oberhalb der Hinterachse des Fahrzeugs kann typischerweise ein geeigneter Höhenunterschied zwischen der Verdampfungsvorrichtung und der wenigstens einen Kondensierungsvorrichtung erreicht werden, um eine passive Zirkulation des Fluides in der Kühlvorrichtung zu erreichen. Außerdem ermöglicht die Anbringung der wenigstens einen Kondensierungsvorrichtung in diesem Bereich eine einfache Zufuhr von Umgebungsluft zur Kühlung der wenigstens einen Kondensierungsvorrichtung und zur Abfuhr von Wärme. Insbesondere beim Fahren kann ein dadurch entstehender Luftstrom der Umgebungsluft einfach zu der wenigstens einen Kondensierungsvorrichtung geleitet werden, um diese zu belüften und eine gute Kühlung der wenigstens einen Kondensierungsvorrichtung zu bewirken. Beispielsweise kann die Umgebungsluft über die Radhäuser zu der wenigstens einen Kondensierungsvorrichtung geleitet werden. Die wenigstens eine Kondensierungsvorrichtung ist in diesem Bereich in Längsrichtung des Fahrzeuges möglichst nahe an der Traktionsbatterie montiert, sodass auch bei einer Neigung des Fahrzeuges noch ein ausreichender Höhenunterschied zwischen der Verdampfungsvorrichtung und der wenigstens einen Kondensierungsvorrichtung sichergestellt ist. So kann bei typischen Fahrzeugen bei einer solchen Anbringung der wenigstens einen Kondensierungsvorrichtung auch bei einer Neigung von beispielsweise 18° noch eine Mindesthöhendifferenz zwischen einem Flüssigkeitsspiegel des Fluides in der Verdampfungsvorrichtung in dem Gehäusekörper und der wenigstens einen Kondensierungsvorrichtung erreicht werden, so dass die Funktion der Kühlvorrichtung als Thermosiphon sichergestellt ist.

In einer vorteilhaften Ausführungsform ist die wenigstens eine Kondensierungsvorrichtung in einem Bereich oberhalb einer Vorderachse des Fahrzeugs, insbesondere oberhalb von Radhäusern der Vorderachse, vorzugsweise an einem windschutzscheibenseitigen Ende einer Motorhaube des Fahrzeugs, angebracht. Auch in diesem Fall kann durch die Anbringung in dem Bereich oberhalb der Vorderachse des Fahrzeugs typischerweise ein geeigneter Höhenunterschied zwischen der Verdampfungsvorrichtung und der wenigstens einen Kondensierungsvorrichtung erreicht werden, um eine passive Zirkulation des Fluides in der Kühlvorrichtung zu erreichen. Außerdem ermöglicht die Anbringung der wenigstens einen Kondensierungsvorrichtung in diesem Bereich eine einfache Zufuhr von Umgebungsluft zur Kühlung der wenigstens einen Kondensierungsvorrichtung und zur Abfuhr von Wärme. Insbesondere beim Fahren kann ein dadurch entstehender Luftstrom der Umgebungsluft einfach zu der wenigstens einen Kondensierungsvorrichtung geleitet werden, um diese zu belüften und eine gute Kühlung der wenigstens einen Kondensierungsvorrichtung zu bewirken, beispielsweise durch einen Lufteinlass im Bereich der Motorhaube, der Kotflügel oder auch durch einen frontseitigen Lufteinlass, von dem die Umgebungsluft zu der wenigstens einen Kondensierungsvorrichtung geleitet werden kann. Auch kann die Umgebungsluft beispielsweise über die Radhäuser zu der wenigstens einen Kondensierungsvorrichtung geleitet werden. Die wenigstens eine Kondensierungsvorrichtung ist in diesem Bereich in Längsrichtung des Fahrzeuges möglichst nahe an der Traktionsbatterie installiert, sodass auch bei einer Neigung des Fahrzeuges noch ein ausreichender Höhenunterschied zwischen der Verdampfungsvorrichtung und der wenigstens einen Kondensierungsvorrichtung sichergestellt ist. Aufgrund einer verbreiteten ansteigenden Form des Fahrzeugs in Richtung zu der Fahrgastzelle, d.h. zu der Windschutzscheibe, kann die wenigstens eine Kondensierungsvorrichtung somit an einem besonders hohen Punkt vor der Windschutzscheibe angebracht werden. Die wenigstens eine Kondensierungsvorrichtung ist dabei vorzugsweise unmittelbar unterhalb einer vorderen Klappe des Fahrzeugs, klassischerweise als Motorhaube bezeichnet, angeordnet, um eine möglichst große Höhendifferenz zu der Verdampfungsvorrichtung zu erreichen. So kann bei typischen Fahrzeugen bei einer solchen Anbringung der wenigstens einen Kondensierungsvorrichtung auch bei einer Neigung von beispielsweise 18° noch eine Mindesthöhendifferenz zwischen einem Flüssigkeitsspiegel des Fluides in der Verdampfungsvorrichtung in dem Gehäusekörper und der wenigstens einen Kondensierungsvorrichtung erreicht werden, so dass die Funktion der Kühlvorrichtung als Thermosiphon sichergestellt ist.

In einer vorteilhaften Ausführungsform ist eine als Steigleitung ausgeführte Verbindungsleitung, die in der Verdampfungsvorrichtung verdampftes Fluid zu der wenigstens einen Kondensierungsvorrichtung leitet, in einem oberen Bereich an einer in Längsrichtung des Fahrzeugs von der Kondensierungsvorrichtung abgewandten Seite mit dem Gehäusekörper und in einem oberen Bereich an einer in Längsrichtung des Fahrzeugs der Verdampfungsvorrichtung zugewandten Seite mit der Kondensierungsvorrichtung verbunden. Diese Anordnung der Steigleitung begünstigt einen Transport des gasförmigen Fluides von der Verdampfungsvorrichtung zu der wenigstens einen Kondensierungsvorrichtung. Dabei ist die Steigleitung vorzugsweise so angeordnet, dass sie bezogen auf eine Seitenrichtung des Fahrzeugs in einem äußeren Bereich davon angeordnet ist, wodurch die Ausgestaltung und Anbringung der Steigleitung begünstigt wird.

In einer vorteilhaften Ausführungsform ist eine als Fallleitung ausgeführte Verbindungsleitung, die kondensiertes Fluid von der wenigstens einen Kondensierungsvorrichtung zurück zu der Verdampfungsvorrichtung leitet, in einem unteren Bereich an einer in Längsrichtung des Fahrzeugs der Kondensierungsvorrichtung zugewandten Seite mit dem Gehäusekörper und in einem unteren Bereich an einer in Längsrichtung des Fahrzeugs von der Verdampfungsvorrichtung abgewandten Seite mit der Kondensierungsvorrichtung verbunden. Diese Anordnung der Fallleitung begünstigt einen Transport des flüssigen Fluides von der wenigstens einen Kondensierungsvorrichtung zu der Verdampfungsvorrichtung. Dabei ist die Fallleitung vorzugsweise so angeordnet, dass sie bezogen auf eine Seitenrichtung des Fahrzeugs in einem äußeren Bereich davon angeordnet ist, wodurch die Ausgestaltung und Anbringung der Fallleitung begünstigt wird.

In einer vorteilhaften Ausführungsform weist der Auslass der wenigstens einen Kondensierungsvorrichtung bei einer maximalen Fahrzeugneigung, beispielsweise 18° in Längsrichtung, wenigstens einen minimalen Höhenunterschied zu einer der Kondensierungsvorrichtung zugewandten Seite des Gehäusekörper auf. Entsprechend wird die Funktion der Kühlvorrichtung als Thermosiphon aufrecht erhalten.

Weitere Vorteile, Einzelheiten und Merkmale der Erfindung ergeben sich nachfolgend aus den erläuterten Ausführungsbeispielen. Dabei zeigen im Einzelnen:
- Figur 1:: eine schematische Darstellung eines elektrisch antreibbaren Fahrzeugs mit einer Traktionsbatterie und einer Kühlvorrichtung gemäß einer ersten, bevorzugten Ausführungsform der vorliegenden Erfindung;
- Figur 2:: eine schematische Darstellung der Traktionsbatterie des Fahrzeugs aus Fig. 1 mit darin angeordneten Batteriezellen und einer Kühlvorrichtung mit mehreren Kühlelementen in drei Ansichten;
- Figur 3:: eine schematische Darstellung der Kühlvorrichtung des Fahrzeugs aus Fig. 1 mit einer Neigung durch eine Hanglage und einer daraus resultierenden Fluidverteilung;
- Figur 4:: eine schematische Darstellung einer Kühlvorrichtung gemäß einer zweiten Ausführungsform der vorliegenden Erfindung mit zwei Kondensierungsvorrichtungen, wobei eine der Kondensierungsvorrichtungen als Chiller ausgeführt und mit einer Klimaanlage des Fahrzeugs gekoppelt ist; und
- Figur 5:: eine schematische Darstellung einer Kühlvorrichtung gemäß einer dritten Ausführungsform der vorliegenden Erfindung mit einem ersten und einem zweiten Kühlkreislauf.

In der nun folgenden Beschreibung bezeichnen gleiche Bezugszeichen gleiche Bauteile bzw. gleiche Merkmale, so dass eine in Bezug auf eine Figur durchgeführte Beschreibung bezüglich eines Bauteils auch für die anderen Figuren gilt, sodass eine wiederholende Beschreibung vermieden wird. Ferner sind einzelne Merkmale, die in Zusammenhang mit einer Ausführungsform beschrieben wurden, auch separat in anderen Ausführungsformen verwendbar.

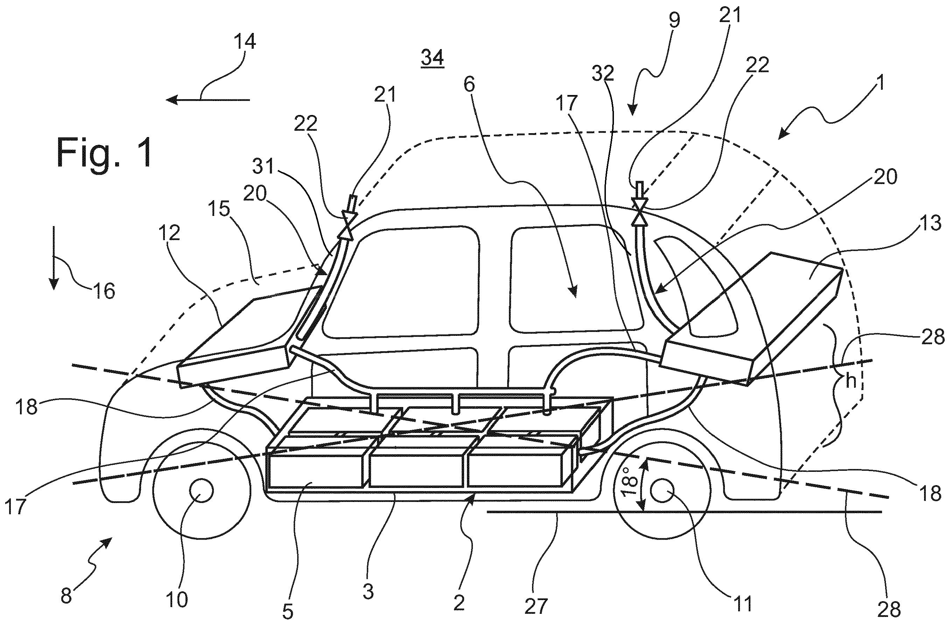

Figuren 1 bis 3 betreffen ein elektrisch antreibbares Fahrzeug 1 gemäß einer ersten, bevorzugten Ausführungsform der vorliegenden Erfindung. Das elektrisch antreibbare Fahrzeug 1 kann ein Fahrzeug 1 mit ausschließlich einem elektrischen Antrieb sein, oder ein sogenanntes Hybridfahrzeug mit einem elektrischen Antrieb in Kombination mit einem konventionellen Antrieb, insbesondere einem Verbrennungsmotor.

Das Fahrzeug 1 umfasst eine Traktionsbatterie 2 zur Bereitstellung von elektrischer Energie zum elektrischen Antrieb des Fahrzeugs 1. Die Traktionsbatterie 2 ist in diesem Ausführungsbeispiel eine Hochleistungsbatterie, die mit Spannungen von bis zu mehreren hundert Volt oder sogar bis zu 1000 Volt sowie Lade- und Entladeströmen von mehreren hundert Ampere bis hin zu 1000 Ampere betrieben werden kann.

Die Traktionsbatterie 2 umfasst einen Gehäusekörper 3, in dem eine Mehrzahl Batteriezellen 4 aufgenommen ist. Die Batteriezellen 4 sind in diesem Ausführungsbeispiel in Lithium-Ionen Technik hergestellt und arbeiten am besten in einem Temperaturbereich von beispielsweise 15° bis 40°C bei einer großen Temperaturhomogenität mit einer Temperaturschwankung von 2 - 4°C innerhalb der und zwischen den Batteriezellen 4. Die Batteriezellen 4 des ersten Ausführungsbeispiels sind in dem Gehäusekörper 3 in mehreren Batteriemodulen 5 angeordnet, wie in Figur 1 dargestellt ist.

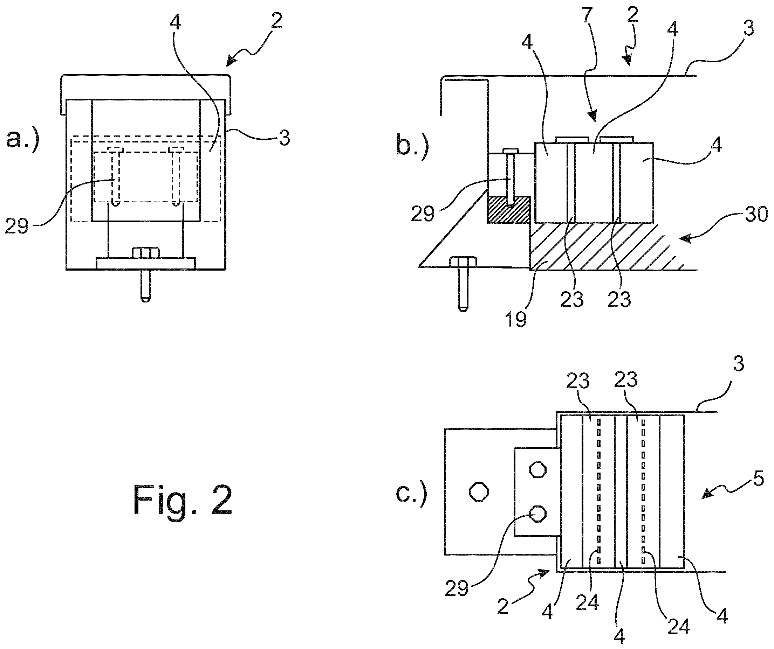

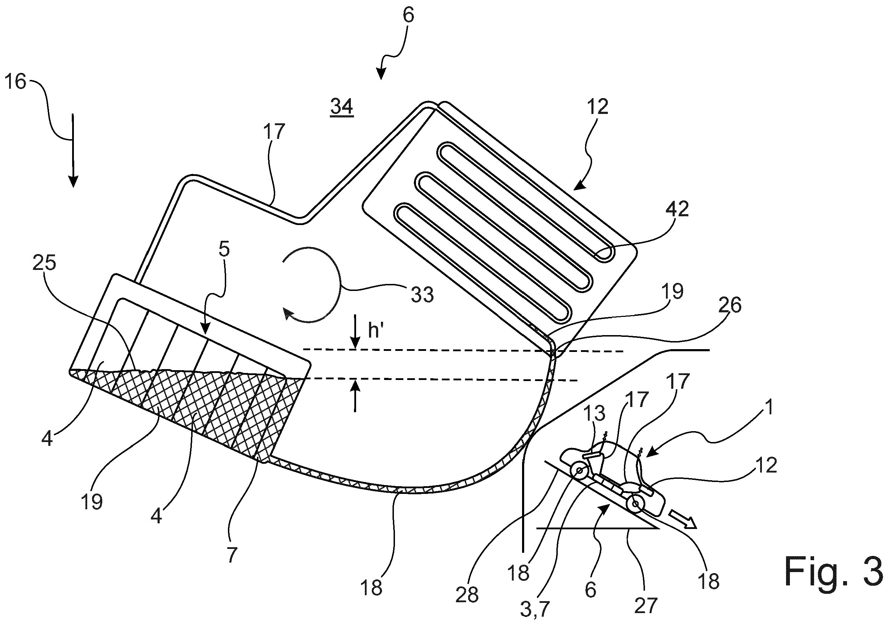

Das Fahrzeug 1 umfasst weiterhin eine Kühlvorrichtung 6. Die Kühlvorrichtung 6 ist in Figur 3 teilweise separat dargestellt. Die Kühlvorrichtung 6 umfasst eine in dem Gehäusekörper 3 angebrachte Verdampfungsvorrichtung 7. Die Verdampfungsvorrichtung 7 ist in einem Bodenbereich 8 des Fahrzeugs 1 angebracht. Dabei ist die Traktionsbatterie 2 mit ihrem Gehäusekörper 3 und der darin angebrachten Verdampfungsvorrichtung 7 unterhalb einer Fahrgastzelle 9 des Fahrzeugs 1 angeordnet, im Detail zwischen einer Vorder- und einer Hinterachse 10, 11 des Fahrzeugs 1. Die Verdampfungsvorrichtung 7 umfasst eine Mehrzahl Verdampfungselemente 23, die jeweils einzeln zwischen zwei Batteriezellen 4 angeordnet sind, wie in Figur 2 dargestellt ist. Daher sind die Verdampfungselemente 23 aus einem elektrisch nicht leitfähigen Material hergestellt. Die entsprechenden Batteriemodule 5 umfassen also neben den Batteriezellen 4 zusätzlich die Verdampfungselemente 23. Die Batteriemodule 5 sind mit Schraubmitteln 29 an dem Gehäusekörper 3 befestigt.

In den Verdampfungselementen 23 sind Mikrokanalstrukturen ausgebildet, die zumindest teilweise seitlich geöffnet sind. Durch den Kontakt der Verdampfungselemente 23 mit den benachbarten Batteriezellen 4 werden die Mikrokanalstrukturen seitlich verschlossen, wodurch in den Verdampfungselementen 23 Mikrokanäle 24 ausgebildet werden. Die Mikrokanäle 24 erstrecken sich in vertikaler Richtung 16 und sind an ihren beiden Endseiten geöffnet.

Die Verdampfungsvorrichtung 7 ist in dem Gehäusekörper 3 der Traktionsbatterie 2 als separates Bauteil eingebracht. Alternativ kann die Verdampfungsvorrichtung 7 fester Bestandteil des Grundkörpers 3 sein.

Die Kühlvorrichtung 6 umfasst weiterhin zwei Kondensierungsvorrichtungen 12, 13, die außerhalb des Gehäusekörpers 3 der Traktionsbatterie 2 angebracht sind. Im Detail sind die zwei Kondensierungsvorrichtungen 12, 13 verteilt an dem Fahrzeug 1 montiert. Dabei ist eine vordere Kondensierungsvorrichtung 12 in Längsrichtung 14 des Fahrzeugs 1 vor der Traktionsbatterie 3 mit der Verdampfungsvorrichtung 7 positioniert, während eine hintere Kondensierungsvorrichtung 13 in Längsrichtung **11** des Fahrzeugs 1 hinter der Traktionsbatterie 3 mit der Verdampfungsvorrichtung 7 positioniert ist.

Die vordere Kondensierungsvorrichtung 12 ist in einem Bereich oberhalb von Radhäusern der Vorderachse 10 des Fahrzeugs 1 an einem windschutzscheibenseitigen Ende einer Motorhaube 15 des Fahrzeugs 1 angebracht. Die vordere Kondensierungsvorrichtung 12 ist in diesem Bereich in Längsrichtung 14 des Fahrzeuges 1 nahe an der Traktionsbatterie 3 installiert. Die vordere Kondensierungsvorrichtung 12 ist dabei unmittelbar unterhalb der Motorhaube 15 angeordnet.

Zusätzlich ist die hintere Kondensierungsvorrichtung 13 in einem Bereich oberhalb von Radhäusern der Hinterachse 11 des Fahrzeugs 1 angebracht, wobei die hintere Kondensierungsvorrichtung 13 in diesem Bereich in Längsrichtung 14 des Fahrzeuges 1 nahe an der Traktionsbatterie 3 montiert ist. Es ergibt sich ein Höhenunterschied h, der beispielhaft für die hintere Kondensierungsvorrichtung 13 in Figur 1 dargestellt ist.

Wie in Figur 1 dargestellt ist, ist die Verdampfungsvorrichtung 7 in einer vertikalen Richtung 16 mit dem Höhenunterschied h unterhalb der beiden Kondensierungsvorrichtungen 12, 13 angeordnet.

Zwischen der Verdampfungsvorrichtung 7 und den beiden Kondensierungsvorrichtungen 12, 13 sind Verbindungsleitungen 17, 18 angeordnet, die eine Fluidverbindung bilden. Die Verbindungsleitungen 17, 18 umfassen im Detail eine Steigleitung 17 und eine Fallleitung 18, die zwischen der Verdampfungsvorrichtung 7 und jeder der beiden Kondensierungsvorrichtungen 12, 13 angeordnet sind. Es ergibt sich eine parallele Verbindung der beiden Kondensierungsvorrichtungen 12, 13 mit der Verdampfungsvorrichtung 7.

Die Steigleitungen 17 sind jeweils in einem oberen Bereich an einer in Längsrichtung 14 des Fahrzeugs 1 von der Kondensierungsvorrichtung 12, 13 abgewandten Seite mit dem Gehäusekörper 3 und in einem oberen Bereich an einer in Längsrichtung 14 des Fahrzeugs 1 der Verdampfungsvorrichtung 7 bzw. dem Gehäusekörper 3 zugewandten Seite mit der entsprechenden Kondensierungsvorrichtung 12, 13 verbunden. In diesem Ausführungsbeispiel sind die Steigleitungen 17 beispielhaft so angeordnet, dass sie bezogen auf eine Seitenrichtung des Fahrzeugs 1 in einem äußeren Bereich davon angeordnet sind.

Die Fallleitungen 18 sind in einem unteren Bereich an einer in Längsrichtung 14 des Fahrzeugs 1 der Kondensierungsvorrichtung 12, 13 zugewandten Seite mit dem Gehäusekörper 3 und in einem unteren Bereich an einer in Längsrichtung 14 des Fahrzeugs 1 von der Verdampfungsvorrichtung 7 bzw. dem Gehäusekörper 3 abgewandten Seite mit der entsprechenden Kondensierungsvorrichtung 12, 13 verbunden. In diesem Ausführungsbeispiel sind die Fallleitungen 18 beispielhaft so angeordnet, dass sie bezogen auf eine Seitenrichtung des Fahrzeugs 1 in einem äußeren Bereich davon angeordnet sind.

In der Kühlvorrichtung 6 ist ein Fluid 19 aufgenommen, wie in den Figuren 2 und 3 dargestellt ist. Das Fluid 19 hat in diesem Ausführungsbeispiel eine Siedetemperatur in einem Bereich zwischen 10°C und 80°C bei Umgebungsdruck. Vorzugsweise weist das Fluid 19 eine Siedetemperatur unterhalb eines maximalen Batteriezellen 4 der Traktionsbatterie 2 auf. Das Fluid 19 ist hier ein dielektrisches Fluid 19, das elektrisch nicht leitfähig ist. Das Fluid 19 ist im flüssigen Zustand in einem Plenum 30 in dem Gehäusekörper 3 der Traktionsbatterie 2 gesammelt, wie in Figur 2 dargestellt ist.

Die beiden Kondensierungsvorrichtungen 12, 13 weisen jeweils eine Druckausgleichsvorrichtung 20 zum Druckausgleich zwischen einem Innenraum 42 der Kühlvorrichtung 6 und einer äußeren Umgebung 34 auf. Wie in Figur 1 dargestellt ist, sind die beiden Druckausgleichsvorrichtungen 20 jeweils nach der Art eines Kamins ausgeführt, an dessen oberen Ende sich jeweils die Druckausgleichsöffnung 21 und unterhalb davon ein Druckausgleichsventil 22 befinden. Die Druckausgleichsvorrichtung 20 ist bei der vorderen Kondensierungsvorrichtung 12 in einer A-Säule 31 und bei der hinteren Kondensierungsvorrichtung 13 in einer C-Säule 32 des Fahrzeuges 1, d.h. am vorderen bzw. hinteren Ende der Fahrgastzelle 9, angeordnet und darin aufgenommen.

Über die Druckausgleichsöffnung 21 kann ein Belüftungsgas, das in diesem Ausführungsbeispiel Umgebungsluft ist, eingelassen (Belüftung) und/oder ein Entlüftungsgas kann aus der Kühlvorrichtung 6 abgelassen werden (Entlüftung). Das Druckausgleichsventil 22 öffnet, wenn der Druck innerhalb der Kühlvorrichtung 6 unter einen Grenzdruck fällt, beispielsweise unter 0,8 bar. Dabei wird einströmendes Belüftungsgas über die Druckausgleichsvorrichtung 20 getrocknet, beispielsweise über eine wechselbare Trocknungskartusche, die hier nicht separat dargestellt ist. Die Entlüftung der Kühlvorrichtung 6 kann über die beiden Druckausgleichsvorrichtungen 20 erfolgen.

Bei der Entlüftung erfolgt in den beiden Druckausgleichsvorrichtungen 20 eine stoffliche Trennung des gasförmigen Fluides 19 und des bei einer vorherigen Belüftung aufgenommenen Belüftungsgases. Die Trennung erfolgt einerseits aufgrund eines Dichteunterschiedes zwischen dem gasförmigen Fluid 19 und dem Belüftungsgas, d.h. der zuvor aufgenommenen Umgebungsluft, über die Länge der beiden Druckausgleichsvorrichtungen 20.

Alternativ oder zusätzlich kann eine Filtereinrichtung, beispielsweise als Aktivkohlefilter, in der Druckausgleichsvorrichtung 20 angeordnet sein, der gasförmiges Fluid 19 bei der Entlüftung zurückhält. Der Aktivkohlefilter wird vorzugsweise durch aktive Wärmezufuhr im Betrieb wieder entladen, wodurch darin aufgenommenes Fluid 19 zurückgewonnen wird. Alternativ oder zusätzlich kann die Filtereinrichtung ein Zeolithmaterial, eine Filtermembran, oder einen chemischen Filter aufweisen. Die Filtereinrichtung ist in den Figuren nicht einzeln dargestellt.

Alternativ oder zusätzlich können die Druckausgleichsvorrichtungen 20 während der Entlüftung aktiv gekühlt werden, sodass in dem in den Druckausgleichsvorrichtungen 20 aufsteigenden Gas enthaltenes gasförmiges Fluid 19 kondensiert wird und nur verbleibendes Gas, im Idealfall ausschließlich zuvor aufgenommenes Belüftungsgas, austritt. Das kondensierte Fluid 19 kann dann im flüssigen Zustand aus der Druckausgleichsvorrichtung 20 in die jeweilige Kondensierungsvorrichtung 12, 13 basierend auf seiner Schwerkraft zurückgeführt werden.

Nachstehend wird ein in der Kühlvorrichtung 3 im Betrieb entstehender erster Kühlkreislauf 33 zum Kühlen der Batteriezellen 4 der Traktionsbatterie 2 beschrieben. Der erste Kühlkreislauf 33 in der Kühlvorrichtung 6 ist in Figur 3 dargestellt.

Im Betrieb, d.h. beim Laden oder Entladen der Traktionsbatterie 2, fällt Wärme an. Diese Wärme wird von den Batteriezellen 4 mittels der Verdampfungsvorrichtung 7 an das flüssige Fluid 19 übertragen. Die Verdampfungsvorrichtung 7 ist in diesem Ausführungsbeispiel als Immersionsverdampfer ausgeführt. Die Mikrokanäle 24 stehen in Fluidkontakt mit dem Plenum 30. Dadurch dringt flüssiges Fluid 19 in die Mikrokanäle 24 ein, wo es durch die von den Batteriezellen 4 angegebene Wärme erwärmt wird. Bei der Aufnahme der Wärme von den Batteriezellen 4 der Traktionsbatterie 2 verdampft das flüssige Fluid 19 in der Verdampfungsvorrichtung 7. Dabei wird flüssiges Fluid 19 mitgerissen, das die Mikrokanäle 24 innenseitig benetzt. Nach der Benetzung kann die Wärmeübertragung über die gesamte Länge der Mikrokanäle 24 erfolgen und es wird eine sehr effiziente Kühlung erzielt. Alternativ können die Batteriezellen 4 und die Verdampfungselemente 23 teilweise in das flüssige Fluid 19 in dem Gehäusekörper 3 der Traktionsbatterie 2 eingetaucht sein, so dass die Mikrokanäle 24 teilweise mit flüssigem Fluid 19 gefüllt sind. Auch dabei kann flüssiges Fluid 19 aus dem Plenum 30 in die Mikrokanäle 24 nachströmen.

Die Verdampfungsvorrichtung 7 ist also ein Wärmeübertrager oder Wärmetauscher, in dem Wärme von den Batteriezellen 4 an das flüssige Fluid 19 übertragen wird, so dass es verdampft. Entsprechend ist eine solche Verdampfungsvorrichtung 7 auch als Verdampfer bekannt. Das gasförmige Fluid 19 steigt in den Steigleitungen 17 zu den beiden Kondensierungsvorrichtungen 12, 13 aufgrund seiner geringen Dichte auf.

Auch die beiden Kondensierungsvorrichtungen 12, 13 sind Wärmeübertrager oder Wärmetauscher, die Wärme von dem gasförmigen Fluid 19 aufnehmen und an eine Umgebung abgeben, so dass das gasförmige Fluid 19 kondensiert. Eine solche Kondensierungsvorrichtung 12, 13 ist auch als Dampfkondensator oder Verflüssiger bekannt.

Das kondensierte Fluid 19 kann durch die Fallleitung 18 von der jeweiligen Kondensierungsvorrichtung 12, 13 zu der Verdampfungsvorrichtung 7 zurückströmen. Der Transport des flüssigen Fluides 19 erfolgt dabei allein aufgrund der Schwerkraft, durch die das flüssige Fluid 19 wieder zurück in den Gehäusekörper 3 strömt, wo es erneut der Verdampfungsvorrichtung 7 zur Verfügung gestellt wird.

Der erste Kühlkreislauf 33 ist in diesem Ausführungsbeispiel nach der Art eines Naturumlaufs ohne aktive Zirkulation des Fluides 19 ausgeführt. Entsprechend erfolgt in der Kühlvorrichtung 6 ein passiver Transport des verdampften Fluides 19 von der Verdampfungsvorrichtung 7 zu den Kondensierungsvorrichtungen 12, 13 sowie ein passiver Transport des kondensierten Fluides 19 von den Kondensierungsvorrichtungen 12, 13 zu der Verdampfungsvorrichtung 7, wie oben beschrieben wurde. Die Kühlvorrichtung 6 ist damit nach der Art eines Thermosiphons ausgebildet. Das Thermosiphon ist also eine passive Konstruktion, die einen Wärmeaustausch durch Nutzung von natürlicher Konvektion in einem vertikalen Fluidkreislauf zwischen der Verdampfungsvorrichtung 7 und den Kondensierungsvorrichtungen 12, 13 ermöglicht. Die Funktion des Thermosiphons beruht auf dem Dichteunterschied zwischen flüssiger und gasförmiger Phase des Fluides 19, wobei das gasförmige Fluid 19 in den Steigleitungen 17 aufgrund seiner geringen Dichte zu den Kondensierungsvorrichtungen 12, 13 strömt bzw. aufsteigt und das kondensierte Fluid 19 von den Kondensierungsvorrichtungen 12, 13 schwerkraftgetrieben durch die Fallleitung 18 in die Verdampfungsvorrichtung 7 zurückströmt bzw. absinkt. Dabei kann das flüssige Fluid 19 in den Gehäusekörper 3 der Traktionsbatterie 2 zurückströmen bzw. absinken, wo das Plenum 30 aus flüssigem Fluid 19 gebildet wird, um von dort in die Verdampfungsvorrichtung 7 einzutreten.

In dem Thermosiphon herrschen bei vertikaler Anordnung der mit Dampf gefüllten Steigleitungen 17 und flüssigkeitsgefüllten Fallleitungen 18 am Boden der Leitungen 17, 18, die an die Verdampfungsvorrichtung 7 angeschlossen sind, unterschiedliche Drücke aufgrund der unterschiedlichen Dichte entsprechender Dampf- bzw. Flüssigkeitssäulen vor. Beim Verdampfen und weiteren Erwärmen des Fluides 19 in der Verdampfungsvorrichtung 7 steigt die Konzentration des gasförmigen Fluides 19. Zwischen den Steigleitungen 17 und den Fallleitungen 18 wird ein Druckausgleich dadurch hergestellt, dass flüssiges Fluid 19 aus den Fallleitungen 18 in die Verdampfungsvorrichtung 7 und damit in Richtung der Dampfsäule in den Steigleitungen 17 strömt und gasförmiges Fluid 19 in die Steigleitungen 17 verdrängt. Das gasförmige Fluid 19 strömt aus den Steigleitungen 17 in die Kondensierungsvorrichtungen 12, 13, wo es wieder kondensiert, so dass der erste Kühlkreislauf 33 geschlossen wird.

Durch eine stetige Verdampfung des flüssigen Fluides 19 am Boden der Steigleitungen 17, d.h. in der Verdampfungsvorrichtung 7, und eine Kondensation des gasförmigen Fluides 19 am oben Ende der Steigleitungen 17, d.h. in den Kondensierungsvorrichtungen 12, 13, sowie der anschließenden Rückführung des kondensierten Fluides 19 aus den Kondensierungsvorrichtungen 12, 13 in die Fallleitungen 18, wird ein kontinuierlicher Kreislauf des Fluides 19 in der Kühlvorrichtung 6 nach der Art des Thermosiphons gebildet und ein dynamischer Umlauf in der Kühlvorrichtung 6 erzeugt. Eine aktive Zirkulation des Fluides 19 durch eine Pumpe oder einen Kompressor ist nicht erforderlich.

Wie oben beschrieben wird mit der Kühlvorrichtung 6 eine Zwei-Phasen-Kühlung gebildet, wobei das flüssige Fluid 19 in der Verdampfungsvorrichtung 7 Wärme von den Batteriezellen 4 aufnimmt, so dass es verdampft, und in den beiden Kondensierungsvorrichtungen 12, 13 Wärme an die Umgebung 34 des Fahrzeugs 1 abgibt, wodurch das gasförmige Fluid 19 wieder kondensiert. Bei der Zirkulation in dem ersten Kühlkreislauf 33 nimmt das flüssige Fluid 19 beim Verdampfen Verdampfungswärme auf, die es beim Kondensieren aus seinem gasförmigen Zustand in den beiden Kondensierungsvorrichtungen 12, 13 wieder abgibt. Die Verdampfungswärme kann somit von den Batteriezellen 4 der Traktionsbatterie 2 abgeführt und an die äußere Umgebung 34 abgegeben werden.

Durch die so gebildete Kühlvorrichtung 6 kann ein zuverlässiger Betrieb sichergestellt werden, der insbesondere auch bei größeren Neigungen des Fahrzeugs 1 nicht beeinträchtigt wird, wie sich aus den Figuren 1 und 3 ergibt. So kann bei typischen Fahrzeugen 1 mit der Kühlvorrichtung 6 des ersten Ausführungsbeispiels auch bei einer Neigung von beispielsweise 18° noch eine Höhendifferenz h' zwischen einem Flüssigkeitsspiegel 25 des Fluides 19 in der Verdampfungsvorrichtung 7 in dem Gehäusekörper 3 und den Kondensierungsvorrichtungen 12, 13, insbesondere einem Auslass 26 der Kondensierungsvorrichtungen 12, 13 für kondensiertes Fluid 19, aufrecht erhalten werden, wie in den Figuren 1 und 3 dargestellt ist. Dort ist jeweils eine Normallage 27 des Fahrzeugs 1 dargestellt mit zusätzlichen Schräglagen 28 von +18° bzw. -18° gegenüber der Normallage 27. Wie in Figur 3 eingezeichnet ist, befindet sich der Auslass 26 der vorderen Kondensierungsvorrichtung 12 für kondensiertes Fluid 19 bei der genannten Fahrzeugneigung mit einem Höhenunterschied h' oberhalb des Flüssigkeitsspiegels 25 des flüssigen Fluides 19 in dem Gehäusekörper 3 der Traktionsbatterie 2, wodurch das kondensierte Fluid 19 schwerkraftgetrieben in den Gehäusekörper 3 strömen kann.

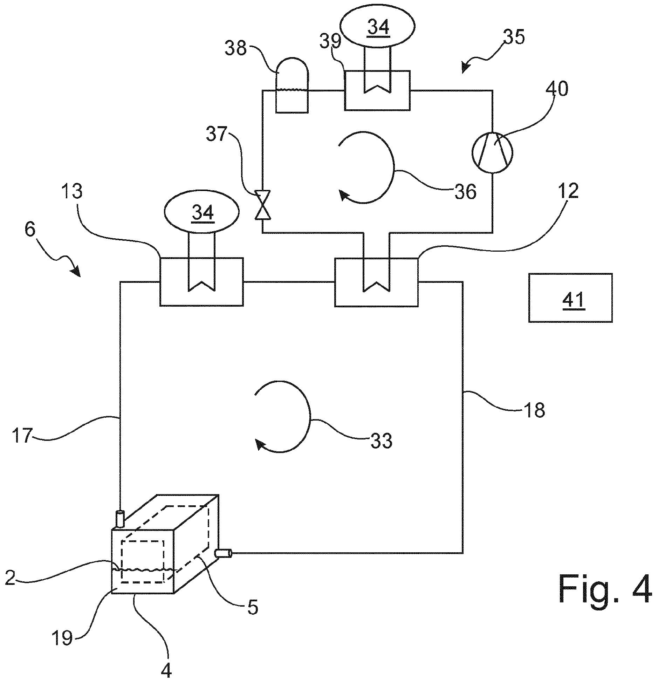

Figur 4 zeigt eine Kühlvorrichtung 6 eines elektrisch antreibbaren Fahrzeugs 1 gemäß einer zweiten Ausführungsform der vorliegenden Erfindung. Die Kühlvorrichtung 6 der zweiten Ausführungsform stimmt weitgehend mit der Kühlvorrichtung 6 der ersten Ausführungsform überein, so dass nachstehend lediglich Unterschiede zwischen den beiden Kühlvorrichtungen 6 diskutiert werden.

Die Kühlvorrichtung 6 der zweiten Ausführungsform unterscheidet sich von der Kühlvorrichtung 6 der ersten Ausführungsform dadurch, dass eine der beiden Kondensierungsvorrichtungen 12, 13, hier beispielhaft die vordere Kondensierungsvorrichtung 12, als ein Chiller zur Kopplung mit einer Klimaanlage 35 des Fahrzeugs 1 ausgeführt ist. Der Chiller dient als steuerbare Wärmesenke abhängig von einem Betrieb der Klimaanlage 35 des Fahrzeugs **1.** Die Klimaanlage 35 umfasst einen Klimakreislauf 36 mit einem separaten Kältemittel. In dem Klimakreislauf 36 sind ein Drosselventil 37, ein Sammler 38, ein Klimakondensator 39 Zur Abgabe von Wärme an die Umgebung 34 und ein Klimakompressor 40 angeordnet.

In der in Figur 4 gezeigten Ausführungsform sind die beiden Kondensierungsvorrichtungen 12, 13 einander nachgeschaltet. Alternativ können die beiden Kondensierungsvorrichtungen 12, 13 parallel mit der Verdampfungsvorrichtung 7 verbunden sein, wie oben in Bezug auf die erste Ausführungsform beschrieben wurde.

In einer weiteren, alternativen Ausführungsform sind beide Kondensierungsvorrichtungen 12, 13 als Chiller zur Kopplung mit der Klimaanlage 35 des Fahrzeugs 1 ausgeführt.

Die Kühlvorrichtung 6 weist zusätzlich eine Steuerungseinrichtung 41 auf, die ausgeführt ist, eine bevorstehende Belastung der Traktionsbatterie 2, insbesondere beim Schnellladen, zu erfassen, und die weiter ausgeführt ist, die Traktionsbatterie 2 und/oder das Fluid 19 bei einer erfassten bevorstehenden Belastung mit der Kühlvorrichtung 6 vorzukühlen. Die Steuerung kann dabei beispielsweise über eine Ansteuerung der Klimaanlage 35 des Fahrzeugs 1 erfolgen. Zusätzlich kann die Steuerungseinrichtung 41 eine geeignete Steuerung der Belüftungsventile 22 durchführen, um aktiv einen Druckausgleich zwischen einem Innenraum 42 der Kühlvorrichtung 6 und der Umgebung 34 durchzuführen. Alternativ oder zusätzlich kann die Steuerungsvorrichtung 41 über ein hier nicht dargestelltes Gebläse der anderen Kondensierungsvorrichtung 12, 13 außenseitig eine erhöhte Menge Umgebungsluft zuführen.

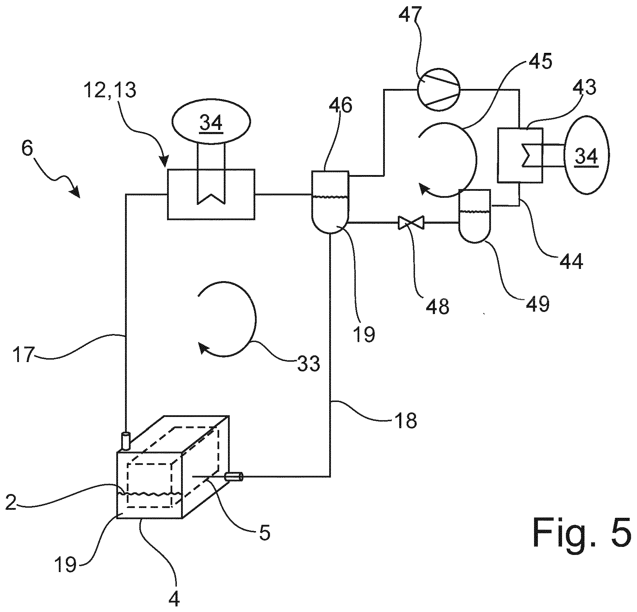

Figur 5 zeigt eine Kühlvorrichtung 6 eines elektrisch antreibbaren Fahrzeug 1 gemäß einer dritten Ausführungsform der vorliegenden Erfindung. Die Kühlvorrichtung 6 der dritten Ausführungsform stimmt weitgehend mit der Kühlvorrichtung 6 der ersten Ausführungsform überein, so dass nachstehend lediglich Unterschiede zwischen den beiden Kühlvorrichtungen 6 diskutiert werden.

Die Kühlvorrichtung 6 der dritten Ausführungsform unterscheidet sich von der Kühlvorrichtung 6 der ersten Ausführungsform dadurch, dass die Kühlvorrichtung 6 eine weitere Kondensierungsvorrichtung 43 und weitere Verbindungsschläuche 44 zur Bildung eines zweiten Kühlkreislaufs 45 aufweist, wie in Figur 5 dargestellt ist. Die beiden Kühlkreisläufe 33, 45 sind über einen Sammler 46 zum Sammeln von flüssigem Fluid 19 miteinander verbunden, d.h. der Sammler 46 ist an einer Verbindung zwischen dem ersten Kühlkreislauf 33 und dem zweiten Kühlkreislauf 45 angeordnet.

Der zweite Kühlkreislauf 45 weist als Zirkulationsvorrichtung 47 zum Fördern des Fluides 19 und zur Druckerhöhung einen Kompressor auf. Außerdem ist in dem zweiten Kühlkreislauf 45 eine Einstelldrossel 48 zur Einstellung eines Druckniveaus vorgesehen. Schließlich umfasst der zweite Kühlkreislauf 45 noch einen Sammelbehälter 49.

In Figur 5 sind die beiden Kondensierungsvorrichtungen 12, 13 gemeinsam dargestellt. Die beiden Kondensierungsvorrichtungen 12, 13 sind dabei vorzugsweise parallel mit der Verdampfungsvorrichtung 7 verbunden. In Figur 5 sind die beiden Kondensierungsvorrichtungen 12, 13 und der Sammler 46 einander nachgeschaltet. Alternativ können die beiden Kondensierungsvorrichtungen 12, 13 und der Sammler 46 parallel mit der Verdampfungsvorrichtung 7 verbunden sein, wie oben in Bezug auf die Anordnung der beiden Kondensierungsvorrichtungen 12, 13 der ersten Ausführungsform beschrieben wurde.

### Bezugszeichenliste

- 1: Fahrzeug
- 2: Traktionsbatterie
- 3: Gehäusekörper
- 4: Batteriezelle
- 5: Batteriemodul
- 6: Kühlvorrichtung
- 7: Verdampfungsvorrichtung
- 8: Bodenbereich
- 9: Fahrgastzelle
- 10: Vorderachse
- 11: Hinterachse
- 12: vordere Kondensierungsvorrichtung
- 13: hintere Kondensierungsvorrichtung
- 14: Längsrichtung
- 15: Motorhaube
- 16: vertikale Richtung
- 17: Steigleitung, Verbindungsleitung
- 18: Fallleitung, Verbindungsleitung
- 19: Fluid
- 20: Belüftungsvorrichtung
- 21: Belüftungsöffnung
- 22: Belüftungsventil
- 23: Verdampfungselement
- 24: Mikrokanal
- 25: Flüssigkeitsspiegel
- 26: Auslass
- 27: Normallage
- 28: Schräglage
- 29: Schraubmittel
- 30: Plenum
- 31: A-Säule
- 32: C-Säule
- 33: erster Kühlkreislauf
- 34: Umgebung
- 35: Klimaanlage
- 36: Klimakreislauf
- 37: Drosselventil
- 38: Sammler
- 39: Klimakondensator
- 40: Klimakompressor
- 41: Steuerungseinrichtung
- 42: Innenraum
- 43: weitere Kondensierungsvorrichtung
- 44: weitere Verbindungsschläuche
- 45: zweiter Kühlkreislauf
- 46: Sammler
- 47: Zirkulationsvorrichtung, Kompressor
- 48: Einstelldrossel
- 49: Sammelbehälter

- h: Höhenunterschied ohne Fahrzeugneigung
- h': Höhenunterschied bei Fahrzeugneigung

## Patentansprüche

1. Kühlvorrichtung (6) zur Kühlung einer Traktionsbatterie (2) eines Fahrzeugs (1) mit einem Fluid (19), mit
einer Verdampfungsvorrichtung (7) zur Anbringung in einem Gehäusekörper (3) der Traktionsbatterie (2),
wenigstens einer Kondensierungsvorrichtung (12, 13) zur Anbringung an dem Fahrzeug (1) außerhalb des Gehäusekörpers (3) der Traktionsbatterie (2), und
Verbindungsleitungen (17, 18), die in der Verdampfungsvorrichtung (7) verdampftes Fluid (19) zu der wenigstens einen Kondensierungsvorrichtung (12, 13) und kondensiertes Fluid (19) von der wenigstens einen Kondensierungsvorrichtung (12, 13) zurück zu der Verdampfungsvorrichtung (7) leiten,
wobei Verdampfungsvorrichtung (7), die wenigstens eine Kondensierungsvorrichtung (12, 13) und die Verbindungsleitungen (17, 18) einen ersten Kühlkreislauf (33) bilden, und
der erste Kühlkreislauf (33) nach der Art eines Naturumlaufes ausgestaltet ist, wobei eine Zirkulation des Fluides (19) durch den ersten Kühlkreislauf (33) einen Transport von gasförmigem Fluid (19) von der Verdampfungsvorrichtung (7) zu der wenigstens einen Kondensierungsvorrichtung (12, 13) und von flüssigem Fluid (19) von der wenigstens einen Kondensierungsvorrichtung (12, 13) zurück zu der Verdampfungsvorrichtung (7) umfasst, und die Zirkulation im Betrieb basierend auf Dichteunterschieden zwischen dem in der Verdampfungsvorrichtung (7) verdampften Fluid (19) und dem in der wenigstens einen Kondensierungsvorrichtung (12, 13) kondensierten Fluid (19) und einem Höhenunterschied zwischen der wenigstens einen Kondensierungsvorrichtung (12, 13) und der Verdampfungsvorrichtung (7) erfolgt, **dadurch gekennzeichnet, dass**
die Verdampfungsvorrichtung (7) als Immersionsverdampfer ausgeführt ist und wenigstens ein Verdampfungselement (23) umfasst,
in dem wenigstens einen Verdampfungselement (23) Mikrokanäle (24) ausgebildet sind,
oder das wenigstens eine Verdampfungselement (23) Mikrokanalstrukturen zur Bildung von Mikrokanälen (24) zusammen mit Batteriezellen (4) der Traktionsbatterie (2) aufweist, oder
zwischen einer Mehrzahl Verdampfungselemente (23) Mikrokanalstrukturen zur Bildung von Mikrokanälen (24) zwischen den Verdampfungselementen (23) und zusammen mit Batteriezellen (4) der Traktionsbatterie (2) ausgebildet sind, und
die Verdampfungselemente (23) derart angeordnet sind, dass in den Mikrokanälen flüssiges Fluid (19) unter Aufnahme von Wärme von den Batteriezellen (4) verdampft.

2. Kühlvorrichtung (6) nach Anspruch 1, **dadurch gekennzeichnet, dass**
die Verdampfungsvorrichtung (7) in einer vertikalen Richtung (16) unterhalb der wenigstens einen Kondensierungsvorrichtung (12, 13) angeordnet ist.

3. Kühlvorrichtung (6) nach Anspruch 1 oder 2, **dadurch gekennzeichnet, dass**
der erste Kühlkreislauf (33) eine Mehrzahl Kondensierungsvorrichtungen (12, 13) aufweist, und
die Mehrzahl Kondensierungsvorrichtungen (12, 13) zur verteilten Montage an dem Fahrzeug (1) ausgeführt sind, insbesondere in Längsrichtung (14) des Fahrzeugs (1) vor und hinter der Verdampfungsvorrichtung (7).

4. Kühlvorrichtung (6) nach einem der vorhergehenden Ansprüche, **dadurch gekennzeichnet, dass**
wenigstens eine Kondensierungsvorrichtung (12, 13) als Chiller zur Kopplung mit einer Klimaanlage (35) des Fahrzeugs (1) ausgeführt ist, um Wärme aus dem ersten Kühlkreislauf (33) über die Klimaanalage (35) abzuführen.

5. Kühlvorrichtung (6) nach einem der vorhergehenden Ansprüche, **dadurch gekennzeichnet, dass**
die Kühlvorrichtung (6) eine weitere Kondensierungsvorrichtung (43) und weitere Verbindungsschläuche (44) zur Bildung eines zweiten Kühlkreislaufs (45) aufweist, und
der zweite Kühlkreislauf (45) eine Zirkulationsvorrichtung (47) zum Fördern des Fluides (19) in dem zweiten Kühlkreislauf (45) aufweist.

6. Kühlvorrichtung (6) nach Anspruch 5, **dadurch gekennzeichnet, dass**
der zweite Kühlkreislauf (45) wenigstens eine Ventilvorrichtung zur strömungstechnischen Trennung von bzw. Verbindung mit dem ersten Kühlkreislauf (33) aufweist.

7. Kühlvorrichtung (6) nach einem der vorhergehenden Ansprüche, **dadurch gekennzeichnet, dass**
die Kühlvorrichtung (6) einen Sammler (46) zum Sammeln von flüssigem Fluid (19) aufweist, wobei der Sammler (46) insbesondere an einer Verbindung zwischen dem ersten Kühlkreislauf (33) und dem zweiten Kühlkreislauf (45) angeordnet ist.

8. Kühlvorrichtung (6) nach einem der vorhergehenden Ansprüche, **dadurch gekennzeichnet, dass**
die Kühlvorrichtung (6) eine Steuerungseinrichtung (41) aufweist, die ausgeführt ist, eine bevorstehende Belastung der Traktionsbatterie (2), insbesondere beim Schnellladen, zu erfassen, und die weiter ausgeführt ist, die Traktionsbatterie (2) und/oder das Fluid (19) bei einer erfassten bevorstehenden Belastung mit der Kühlvorrichtung (6) vorzukühlen; und/oder
**dadurch gekennzeichnet, dass**
die Kühlvorrichtung (6), insbesondere wenigstens eine Kondensierungsvorrichtung (12, 13), eine Druckausgleichsvorrichtung (20) zum Druckausgleich zwischen einem Innenraum (42) der Kühlvorrichtung (6) und einer äußeren Umgebung (34) aufweist.

9. Elektrisch antreibbares Fahrzeug (1) mit einer Traktionsbatterie (2) und einer Kühlvorrichtung (6) nach einem der vorhergehenden Ansprüche 1 bis 8, wobei
die Traktionsbatterie (2) mit ihrem Gehäusekörper (3) und der darin angebrachten Verdampfungsvorrichtung (7) in einem Bodenbereich (8) des Fahrzeugs (1) angebracht ist,
die wenigstens eine Kondensierungsvorrichtung (12, 13) außerhalb der Traktionsbatterie (2) in einem Bereich oberhalb der Verdampfungsvorrichtung (7) angebracht ist, und
ein Fluid (19) in der Kühlvorrichtung (6) aufgenommen ist.

10. Fahrzeug (1) nach Anspruch 9, **dadurch gekennzeichnet, dass**
die Traktionsbatterie (2) mit ihrem Gehäusekörper (3) und der darin angebrachten Verdampfungsvorrichtung (7) unterhalb einer Fahrgastzelle (9) des Fahrzeugs (1) angeordnet ist, vorzugsweise zwischen einer Vorder- und einer Hinterachse (10, 11) des Fahrzeugs (1).

11. Fahrzeug (1) nach einem der vorhergehenden Ansprüche 9 oder 10, **dadurch gekennzeichnet, dass**
die wenigstens eine Kondensierungsvorrichtung (12, 13) in einem Bereich oberhalb einer Hinterachse (11) des Fahrzeugs (1), insbesondere oberhalb von Radhäusern der Hinterachse (11), angebracht ist.

12. Fahrzeug (1) nach einem der vorhergehenden Ansprüche 9 bis 11, **dadurch gekennzeichnet, dass**
die wenigstens eine Kondensierungsvorrichtung (12, 13) in einem Bereich oberhalb einer Vorderachse (10) des Fahrzeugs (1), insbesondere oberhalb von Radhäusern der Vorderachse (10), vorzugsweise an einem windschutzscheibenseitigen Ende einer Motorhaube (15) des Fahrzeugs (1), angebracht ist.

13. Fahrzeug (1) nach einem der vorhergehenden Ansprüche 9 bis 12, **dadurch gekennzeichnet, dass**
eine als Steigleitung (17) ausgeführte Verbindungsleitung (17, 18), die in der Verdampfungsvorrichtung (7) verdampftes Fluid (19) zu der wenigstens einen Kondensierungsvorrichtung (12, 13) leitet, in einem oberen Bereich an einer in Längsrichtung (14) des Fahrzeugs (1) von der Kondensierungsvorrichtung (12, 13) abgewandten Seite mit dem Gehäusekörper (3) und in einem oberen Bereich an einer in Längsrichtung (14) des Fahrzeugs (1) der Verdampfungsvorrichtung (7) zugewandten Seite mit der Kondensierungsvorrichtung (12, 13) verbunden ist.

14. Fahrzeug (1) nach einem der vorhergehenden Ansprüche 9 bis 13, **dadurch gekennzeichnet, dass**
eine als Fallleitung (18) ausgeführte Verbindungsleitung (17, 18), die kondensiertes Fluid (19) von der wenigstens einen Kondensierungsvorrichtung (12, 13) zurück zu der Verdampfungsvorrichtung (7) leitet, in einem unteren Bereich an einer in Längsrichtung (14) des Fahrzeugs (1) der Kondensierungsvorrichtung (12, 13) zugewandten Seite mit dem Gehäusekörper (3) und in einem unteren Bereich an einer in Längsrichtung (14) des Fahrzeugs (1) von der Verdampfungsvorrichtung (7) abgewandten Seite mit der Kondensierungsvorrichtung (12, 13) verbunden ist.

15. Fahrzeug (1) nach einem dem vorhergehenden Anspruch 16, **dadurch gekennzeichnet, dass**
der Auslass der wenigstens einen Kondensierungsvorrichtung (12, 13) bei einer maximalen Fahrzeugneigung, beispielsweise 18° in Längsrichtung (14), wenigstens einen minimalen Höhenunterschied (h') zu einer der Kondensierungsvorrichtung (12, 13) zugewandten Seite des Gehäusekörper (3) aufweist.

## Claims

1. Cooling device (6) for cooling a traction battery (2) of a vehicle (1) by means of a fluid (19), comprising
an evaporation device (7) for installing in a housing body (3) of the traction battery (2),
at least one condensation device (12, 13) for installing on the vehicle (1) outside of the housing body (3) of the traction battery (2), and
connection lines (17, 18) which conduct fluid (19) evaporated in the evaporation device (7) to the at least one condensation device (12, 13) and condensed fluid (19) from the at least one condensation device (12, 13) back to the evaporation device (7),
wherein the evaporation device (7), the at least one condensation device (12, 13) and the connection lines (17, 18) form a first cooling circuit (33), and
the first cooling circuit (33) is designed in the form of a natural circulation, wherein a circulation of the fluid (19) through the first cooling circuit (33) includes transporting gaseous fluid (19) from the evaporation device (7) to the at least one condensation device (12 ,13) and transporting liquid fluid (19) from the at least one condensation device (12, 13) back to the evaporation device (7), and the circulation is carried out in operation on the basis of differences in density between the fluid (19) evaporated in the evaporation device (7) and the fluid (19) condensed in the at least one condensation device (12, 13), and on the basis of a difference in height between the at least one condensation device (12, 13) and the evaporation device (7), **characterized in that**
the evaporation device (7) is designed as an immersion evaporator and comprises at least one evaporation element (23),
microchannels (24) are formed in the at least one evaporation element (23),
or the at least one evaporation element (23) comprises microchannel structures for forming microchannels (24) together with battery cells (4) of the traction battery (2), or
microchannel structures are formed between a plurality of evaporation elements (23) to form microchannels (24) between the evaporation elements (23) and together with battery cells (4) of the traction battery (2), and
the evaporation elements (23) are arranged in such a way that liquid fluid (19) evaporates in the microchannels while absorbing heat from the battery cells (4).

2. Cooling device (6) according to claim 1, **characterized in that**
the evaporation device (7) is arranged in a vertical direction (16) below the at least one condensation device (12, 13).

3. Cooling device (6) according to claim 1 or 2, **characterized in that**
the first cooling circuit (33) comprises a plurality of condensation devices (12, 13), and
the plurality of condensation devices (12, 13) is designed for a distributed installation on the vehicle (1), in particular in the longitudinal direction (14) of the vehicle (1) in front of and behind the evaporation device (7).

4. Cooling device (6) according to any of the preceding claims,
**characterized in that**
at least one condensation device (12, 13) is designed as a chiller for coupling to an air conditioning system (35) of the vehicle (1) in order to dissipate heat from the first cooling circuit (33) via the air conditioning system (35).

5. Cooling device (6) according to any of the preceding claims,
**characterized in that**
the cooling device (6) comprises a further condensation device (43) and further connection hoses (44) to form a second cooling circuit (45), and
the second cooling circuit (45) comprises a circulation device (47) for conveying the fluid (19) in the second cooling circuit (45).

6. Cooling device (6) according to claim 5, **characterized in that**
the second cooling circuit (45) comprises at least one valve device for fluidic separation from or connection to the first cooling circuit (33).

7. Cooling device (6) according to any of the preceding claims,
**characterized in that**
the cooling device (6) has a collector (46) for collecting the liquid fluid (19), wherein the collector (46) is arranged in particular at a connection between the first cooling circuit (33) and the second cooling circuit (45).

8. Cooling device (6) according to any of the preceding claims,
**characterized in that**
the cooling device (6) comprises a control device (41) which is designed to detect an impending load on the traction battery (2), in particular during rapid charging, and which is also designed to pre-cool the traction battery (2) and/or the fluid (19) with the cooling device (6) when an imminent load is detected; and/or
**characterized in that**
the cooling device (6), in particular at least one condensation device (12, 13), comprises a pressure compensation device (20) for pressure compensation between an interior (42) of the cooling device (6) and an external environment (34).

9. Electrically drivable vehicle (1) comprising a traction battery (2) and a cooling device (6) according to any of the preceding claims 1 to 8, wherein
the traction battery (2) with its housing body (3) and the evaporation device (7) installed therein is installed in a floor region (8) of the vehicle (1),
the at least one condensation device (12, 13) is installed outside of the traction battery (2) in a region above the evaporation device (7), and
a fluid (19) is accommodated in the cooling device (6).

10. Vehicle (1) according to claim 9, **characterized in that**
the traction battery (2) with its housing body (3) and the evaporation device (7) installed therein is arranged underneath a passenger compartment (9) of the vehicle (1), preferably between a front and a rear axle (10, 11) of the vehicle (1).

11. Vehicle (1) according to either claim 9 or claim 10, **characterized in that**
the at least one condensation device (12, 13) is installed in a region above a rear axle (11) of the vehicle (1), in particular above wheel housings of the rear axle (11).

12. Vehicle (1) according to any of the preceding claims 9 to 11,
**characterized in that**
the at least one condensation device (12, 13) is installed in a region above a front axle (10) of the vehicle (1), in particular above wheel housings of the front axle (10), preferably at an end of a hood (15) of the vehicle (1) on the windshield side.

13. Vehicle (1) according to any of the preceding claims 9 to 12,
**characterized in that**
a connection line (17, 18) designed as a riser (17), which conducts fluid (19) evaporated in the evaporation device (7) to the at least one condensation device (12, 13), is connected to the housing body (3) in an upper region on a side facing away from the condensation device (12, 13) in the longitudinal direction (14) of the vehicle (1), and is connected to the condensation device (12, 13) in an upper region on a side facing the evaporation device (7) in the longitudinal direction (14) of the vehicle (1).

14. Vehicle (1) according to any of the preceding claims 9 to 13,
**characterized in that**
a connection line (17, 18) designed as a downcomer (18), which returns condensed fluid (19) from the at least one condensation device (12, 13) to the evaporation device (7), is connected to the housing body (3) in a lower region on a side facing the condensation device (12, 13) in the longitudinal direction (14) of the vehicle (1), and is connected to the condensation device (12, 13) in a lower region on a side facing away from the evaporation device (7) in the longitudinal direction (14) of the vehicle (1).

15. Vehicle (1) according to the preceding claim 16, **characterized in that**
the outlet of the at least one condensation device (12, 13) has at least a minimum difference in height (h') to a side of the housing body (3) facing the condensation device (12, 13) at a maximum vehicle inclination, for example 18° in the longitudinal direction (14).

## Revendications

1. Dispositif de refroidissement (6) pour le refroidissement d'une batterie de traction (2) d'un véhicule (1) comportant un fluide (19), comportant
un dispositif d'évaporation (7) destiné à être monté dans un corps formant boîtier (3) de la batterie de traction (2),
au moins un dispositif de condensation (12, 13) destiné à être monté sur le véhicule (1) à l'extérieur du corps formant boîtier (3) de la batterie de traction (2), et
des conduites de raccordement (17, 18) qui conduisent le fluide (19) évaporé dans le dispositif d'évaporation (7) vers l'au moins un dispositif de condensation (12, 13) et conduisent en retour le fluide (19) condensé depuis l'au moins un dispositif de condensation (12, 13) vers le dispositif d'évaporation (7),
dans lequel le dispositif d'évaporation (7), l'au moins un dispositif de condensation (12, 13) et les conduites de raccordement (17, 18) forment un premier circuit de refroidissement (33), et
le premier circuit de refroidissement (33) est conçu à la manière d'une circulation naturelle, dans lequel une circulation du fluide (19) à travers le premier circuit de refroidissement (33) comprend un transport de fluide (19) gazeux depuis le dispositif d'évaporation (7) vers l'au moins un dispositif de condensation (12, 13) et un transport en retour de fluide (19) liquide depuis l'au moins un dispositif de condensation (12, 13) vers le dispositif d'évaporation (7), et la circulation en fonctionnement basée sur des différences de densité entre le fluide (19) évaporé dans le dispositif d'évaporation (7) et le fluide (19) condensé dans l'au moins un dispositif de condensation (12, 13) et une différence de hauteur entre l'au moins un dispositif de condensation (12, 13) et le dispositif d'évaporation (7) est effectuée, **caractérisé en ce que**
le dispositif d'évaporation (7) est conçu sous forme d'évaporateur à immersion et comprend au moins un élément d'évaporation (23),
des microcanaux (24) sont réalisés dans l'au moins un élément d'évaporation (23),
ou l'au moins un élément d'évaporation (23) présente des structures formant microcanaux pour la formation de microcanaux (24) conjointement avec des cellules de batterie (4) de la batterie de traction (2), ou
des structures formant microcanaux sont réalisées entre une pluralité d'éléments d'évaporation (23) pour la formation de microcanaux (24) entre les éléments d'évaporation (23) et conjointement avec des cellules de batterie (4) de la batterie de traction (2), et
les éléments d'évaporation (23) sont disposés de telle sorte que, dans les microcanaux, du fluide (19) liquide s'évapore en recevant la chaleur des cellules de batterie (4).

2. Dispositif de refroidissement (6) selon la revendication 1,
**caractérisé en ce que**
le dispositif d'évaporation (7) est disposé dans une direction verticale (16) en dessous de l'au moins un dispositif de condensation (12, 13).

3. Dispositif de refroidissement (6) selon la revendication 1 ou 2,
**caractérisé en ce que**
le premier circuit de refroidissement (33) présente une pluralité de dispositifs de condensation (12, 13), et
la pluralité de dispositifs de condensation (12, 13) sont conçus pour être montés de manière répartie sur le véhicule (1), en particulier dans la direction longitudinale (14) du véhicule (1) en amont et en aval du dispositif d'évaporation (7).

4. Dispositif de refroidissement (6) selon l'une des revendications précédentes, **caractérisé en ce que**
au moins un dispositif de condensation (12, 13) est conçu sous forme de refroidisseur destiné à être accouplé à un système de climatisation (35) du véhicule (1) afin d'évacuer la chaleur du premier circuit de refroidissement (33) par l'intermédiaire du système de climatisation (35).

5. Dispositif de refroidissement (6) selon l'une des revendications précédentes, **caractérisé en ce que**
le dispositif de refroidissement (6) présente un autre dispositif de condensation (43) et d'autres tuyaux de raccordement (44) pour la formation d'un second circuit de refroidissement (45), et
le second circuit de refroidissement (45) présente un dispositif de circulation (47) pour l'acheminement du fluide (19) dans le second circuit de refroidissement (45).

6. Dispositif de refroidissement (6) selon la revendication 5,
**caractérisé en ce que**
le second circuit de refroidissement (45) présente au moins un dispositif à soupape pour la séparation ou le raccordement fluidique avec le premier circuit de refroidissement (33).

7. Dispositif de refroidissement (6) selon l'une des revendications précédentes, **caractérisé en ce que**
le dispositif de refroidissement (6) présente un collecteur (46) permettant de collecter le fluide (19) liquide, dans lequel le collecteur (46) est disposé en particulier au niveau d'un raccord entre le premier circuit de refroidissement (33) et le second circuit de refroidissement (45).

8. Dispositif de refroidissement (6) selon l'une des revendications précédentes, **caractérisé en ce que**
le dispositif de refroidissement (6) présente un appareil de commande (41) qui est configuré pour détecter une charge imminente de la batterie de traction (2), en particulier lors de la recharge rapide, et qui est en outre configuré pour prérefroidir, avec le dispositif de refroidissement (6), la batterie de traction (2) et/ou le fluide (19) en présence d'une charge imminente détectée ; et/ou
**caractérisé en ce que**
le dispositif de refroidissement (6), en particulier au moins un dispositif de condensation (12, 13), présente un dispositif d'équilibrage de pression (20) pour l'équilibrage de pression entre un espace intérieur (42) du dispositif de refroidissement (6) et un environnement extérieur (34).

9. Véhicule (1) pouvant être entraîné électriquement comportant une batterie de traction (2) et un dispositif de refroidissement (6) selon l'une des revendications précédentes 1 à 8, dans lequel
la batterie de traction (2) est montée avec son corps formant boîtier (3), et le dispositif d'évaporation (7) monté dans celui-ci, dans une zone formant plancher (8) du véhicule (1),
l'au moins un dispositif de condensation (12, 13) est monté à l'extérieur de la batterie de traction (2) dans une zone située au-dessus du dispositif d'évaporation (7), et
un fluide (19) est reçu dans le dispositif de refroidissement (6).

10. Véhicule (1) selon la revendication 9, **caractérisé en ce que**
la batterie de traction (2) est disposée avec son corps formant boîtier (3), et le dispositif d'évaporation (7) monté dans celui-ci, sous un habitacle (9) du véhicule (1), de préférence entre un essieu avant et un essieu arrière (10, 11) du véhicule (1).

11. Véhicule (1) selon l'une des revendications précédentes 9 ou 10,
**caractérisé en ce que**
l'au moins un dispositif de condensation (12, 13) est monté dans une zone au-dessus d'un essieu arrière (11) du véhicule (1), en particulier au-dessus de passages de roue de l'essieu arrière (11).

12. Véhicule (1) selon l'une des revendications précédentes 9 à 11,
**caractérisé en ce que**
l'au moins un dispositif de condensation (12, 13) est monté dans une zone au-dessus d'un essieu avant (10) du véhicule (1), en particulier au-dessus de passages de roue de l'essieu avant (10), de préférence à une extrémité côté pare-brise d'un capot moteur (15) du véhicule (1).

13. Véhicule (1) selon l'une des revendications précédentes 9 à 12,
**caractérisé en ce que**
une conduite de raccordement (17, 18) conçue sous forme de conduite montante (17) qui conduit le fluide (19) évaporé dans le dispositif d'évaporation (7) vers l'au moins un dispositif de condensation (12, 13) et qui est raccordée, dans une zone supérieure sur un côté opposé au dispositif de condensation (12, 13) dans la direction longitudinale (14) du véhicule (1), au corps formant boîtier (3) et, dans une zone supérieure sur un côté tourné vers le dispositif d'évaporation (7) dans la direction longitudinale (14) du véhicule (1), au dispositif de condensation (12, 13).

14. Véhicule (1) selon l'une des revendications précédentes 9 à 13,
**caractérisé en ce que**
une conduite de raccordement (17, 18) conçue sous forme de conduite descendante (18) qui conduit en retour le fluide (19) condensé depuis l'au moins un dispositif de condensation (12, 13) vers le dispositif d'évaporation (7) et qui est raccordée, dans une zone inférieure sur un côté tourné vers le dispositif de condensation (12, 13) dans la direction longitudinale (14) du véhicule (1), au corps formant boîtier (3) et, dans une zone inférieure sur un côté opposé au dispositif d'évaporation (7) dans la direction longitudinale (14) du véhicule (1), au dispositif de condensation (12, 13).

15. Véhicule (1) selon l'une des revendications précédentes 16,
**caractérisé en ce que**
la sortie de l'au moins un dispositif de condensation (12, 13) présente, pour une inclinaison maximale du véhicule, par exemple 18° dans la direction longitudinale (14), au moins une différence de hauteur minimale (h') par rapport à un côté du corps formant boîtier (3) tourné vers le dispositif de condensation (12, 13).
